# EUROPEAN PATENT SPECIFICATION

(11) **EP 1 594 952 B1**
(45) Date of publication and mention of the grant of the patent: **29.08.2007**
(21) Application number: 03796189.3
(22) Date of filing: 15.12.2003
(51) Int. Cl.: C12N 1/14, A01N 63/04

(54) **BIOLOGICAL CONTROL AGENT AND FORMULATIONS**
BIOLOGISCHE SCHÄDLINGSBEKÄMPFUNGSMITTEL UND FORMULIERUNGEN
AGENT DE LUTTE BIOLOGIQUE ET COMPOSITIONS

(30) Priority: 13.12.2002 GB 0229126
(43) Date of publication of application: 16.11.2005
(73) Proprietor: A.M.C. Chemical S.L., Poligono Industrial La Isla, Dos Hermanas, 41700 Sevilla (ES)
(72) Inventor: Gomis Garcia, Maria Dolores, Dos Hermanas, 41700 Sevilla (ES); Akdi, Khalid, Dos Hermanas, 41700 Sevilla (ES); Perez Barrera, Francisco, Dos Hermanas, 41700 Sevilla (ES); Exposito Cubero, Carmelo, Dos Hermanas, 41700 Sevilla (ES)
(74) Representative: Esteban Perez-Serrano, Maria Isabel
(86) International application number: PCT/GB2003/005493
(87) International publication number: WO 2004/054365

(56) References cited:
- EP-A- 0 466 133
- WO-A-93/08694
- WO-A-97/16974
- DATABASE WPI Section Ch, Week 200014 Derwent Publications Ltd., London, GB; Class C06, AN 2000-159330 XP002287909 -& RU 2 121 793 C1 (VEKTOR RES CENTRE) 20 November 1998 (1998-11-20)
- HERMOSA M R ET AL: "MOLECULAR CHARACTERIZATION AND IDENTIFICATION OF BIOCONTROL ISOLATES OF TRICHODERMA SPP" APPLIED AND ENVIRONMENTAL MICROBIOLOGY, WASHINGTON,DC, US, vol. 66, no. 5, May 2000 (2000-05), pages 1890-1898, XP002948965 ISSN: 0099-2240
- COTXARRERA L ET AL: "Use of sewage sludge compost and Trichoderma asperellum isolates to suppress Fusarium wilt of tomato" SOIL BIOLOGY AND BIOCHEMISTRY, PERGAMON, OXFORD, GB, vol. 34, no. 4, April 2002 (2002-04), pages 467-476, XP002970667 ISSN: 0038-0717
- GRONDONA I ET AL: "Physiological and biochemical characterization of Trichoderma harzianum, a biocontrol agent against soilborne fungal plant pathogens" APPLIED AND ENVIRONMENTAL MICROBIOLOGY, WASHINGTON,DC, US, vol. 63, no. 8, August 1997 (1997-08), pages 3189-3198, XP002970668 ISSN: 0099-2240
- SZTEJNBERG A ET AL: "CONTROL OF ROSELLINIA-NECATRIX IN SOIL AND IN APPLE ORCHARD BY SOLARIZATION AND TRICHODERMA-HARZIANUM" PLANT DISEASE, vol. 71, no. 4, 1987, pages 365-369, XP008032763 ISSN: 0191-2917
- NEMEC S ET AL: "Efficacy of biocontrol agents in planting mixes to colonize plant roots and control root diseases of vegetables and citrus" CROP PROTECTION, vol. 15, no. 8, 1996, pages 735-742, XP002288027 ISSN: 0261-2194
- GOLDMAN G H ET AL: "MOLECULAR AND CELLULAR BIOLOGY OF BIOCONTROL BY TRICHODERMA SPP" TRENDS IN BIOTECHNOLOGY, ELSEVIER PUBLICATIONS, CAMBRIDGE, GB, vol. 12, December 1994 (1994-12), pages 478-482, XP001007499 ISSN: 0167-7799

### SEQUENCE LISTING

<110> A.M.C. Chemical S.L.
   Gomis Garcia, Maria Dolores
   Akdi, Khalid
   Pérez Barrera, Francisco
   Expósito Cubero, Carmelo
<120> Biological Control Agent And Formulations
<130> WPP287206
<140> PCT/GB2003/005493
   <141> 2003-12-15
<150> GB0229126.8
   <151> 2002-12-13
<160> 9
<170> PatentIn version 3.1
<210> 1
   <211> 19
   <212> DNA
   <213> Artificial sequence
<220>
   <223> Primer
<400> 1
   tcggtaggtg aacctgcgg 19
<210> 2
   <211> 20
   <212> DNA
   <213> Artificial sequence
<220>
   <223> Primer
<400> 2
   tcctccgctt attgatatgc 20
<210> 3
   <211> 20
   <212> DNA
   <213> Artificial sequence
<220>
   <223> Primer
<400> 3
   gctgcgttct tcatcgatgc 20
<210> 4
   <211> 20
   <212> DNA
   <213> Artificial sequence
<220>
   <223> Primer
<400> 4
   gcatcgatga agaacgcagc 20
<210> 5
   <211> 617
   <212> DNA
   <213> Trichoderma sp.
<400> 5
   tccgtaggtg aacctgcgga gggatcatta ccgagttaca actcccaaac ccaatgtgaa 60
   cgttaccaaa ctgttgcctc ggcgggatct ctgccccggg tgcgtcgcag ccccggacca 120
   aggcgcccgc cggaggacca accaaaactc ttattgtata ccccctcgcg ggttttttta 180
   taatctgagc cttctcggcg cctctcgtag gcgtttcgaa aatgaatcaa aactttcaac 240
   aacggatctc ttggttctgg catcgatgaa gaacgcagcg aaatgcgata agtaatgtga 300
   attgcagaat tcagtgaatc atcgaatctt tgaacgcaca ttgcgcccgc cagtattctg 360
   gcgggcatgc ctgtccgagc gtcatttcaa ccctcgaacc cctccggggg gtcggcgttg 420
   gggatcggcc ctgccttggc ggtggccgtc tccgaaatac agtggcggtc tcgccgcagc 480
   ctctcctgcg cagtagtttg cacactcgca tcgggagcgc ggcgcgtcca cagccgttam 540
   acacccaact tctgaaatgt tgacctcgga tcaggtagga atacccgctg aacttaagca 600
   tatcaataag cggagga 617
<210> 6
   <211> 617
   <212> DNA
   <213> Trichoderma sp.
<400> 6
   tccgtaggtg aacctgcgga gggatcatta ccgagttaca actcccaaac ccaatgtgaa 60
   cgttaccaaa ctgttgcctc ggcgggatct ctgccccggg tgcgtcgcag ccccggacca 120
   aggcgcccgc cggaggacca accaaaactc ttattgtata ccccctcgcg ggttttttta 180
   taatctgagc cttctcggcg cctctcgtag gcgtttcgaa aatgaatcaa aactttcaac 240
   aacggatctc ttggttctgg catcgatgaa gaacgcagcg aaatgcgata agtaatgtga 300
   attgcagaat tcagtgaatc atcgaatctt tgaacgcaca ttgcgcccgc cagtattctg 360
   gcgggcatgc ctgtccgagc gtcatttcaa ccctcgaacc cctccggggg gtcggcgttg 420
   gggatcggcc ctgccttggc ggtggccgtc tccgaaatac agtggcggtc tcgccgcagc 480
   ctctcctgcg cagtagtttg cacactcgca tcgggagcgc ggcgcgtcca cagccgttam 540
   acacccaact tctgaaatgt tgacctcgga tcaggtagga atacccgctg aacttaagca 600
   tatcaataag cggagga 617
<210> 7
   <211> 617
   <212> DNA
   <213> Trichoderma sp.
<400> 7
   tccgtaggtg aacctgcgga gggatcatta ccgagtttac aactcccaaa cccaatgtga 60
   acgttaccaa actgttgcct cggcgggatc tctgccccgg gtgcgtcgca gccccggacc 120
   aaggcgcccg ccggaggacc aaccaaaact ctttttgtat accccctcgc gggtttttta 180
   taatctgagc cttctcggcg cctctcgtag gcgtttcgaa aatgaatcaa aactttcaac 240
   aacggatctc ttggttctgg catcgatgaa gaacgcagcg aaatgcgata agtaatgtga 300
   attgcagaat tcagtgaatc atcgaatctt tgaacgcaca ttgcgcccgc cagtattctg 360
   gcgggcatgc ctgtccgagc gtcatttcaa ccctcgaacc cctccggggg gtcggcgttg 420
   gggatcggcc ctcccttagc gggtggccgt ctccgaaata cagtggcggt ctcgccgcag 480
   cctctcctgc gcagtagttt gcacactcgc atcgggagcg cggcgcgtcc acagccgtta 540
   cacaccccac ttctgaaatg ttgacctcgg atcaggtagg atacccgctg aacttaagca 600
   tatcaataag cggagga 617
<210> 8
   <211> 631
   <212> DNA
   <213> Trichoderma sp.
<400> 8
   tccgtaggtg aacctgcgga gggatcatta ccgagtttac aactcccaaa cccaatgtga     60
   acgttaccaa actgttgcct cggcgggatc tctgccccgg gtgcgtcgca gccccggacc    120
   aaggcgcccg ccggaggacc aaccaaaact ctttttgtat accccctcgc gggtttttta    180
   taatctgagc cttctcggcg cctctcgtag gcgtttcgaa aatgaatcaa aactttcaac    240
   aacggatctc ttggttctgg catcgatgaa gaacgcagcg aaatgcgata agtaatgtga    300
   attgcagaat tcagtgaatc atcgaatctt tgaacgcaca ttgcgcccgc cagtattctg    360
   gcgggcatgc ctgtccgagc gtcatttcaa ccctcgaacc cctccggggg gtcggcgttg    420
   gggatcggcc ctcccttagc gggtggccgt ctccgaaata cagtggcggt ctcgccgcag    480
   cctctcctgc gcagtagttt gcacactcgc atcgggagcg cggcgcgtcc acagccgtta    540
   cacaccccac ttctgaaatg ttgacctcgg atcaggtagg acagccgtta cacaccccac    600
   ttctgaaatg ttgacctcgg atcaggtagg a                                   631
<210> 9
   <211> 610
   <212> DNA
   <213> Trichoderma sp.
<400> 9
   tccgtaggtg aacctgcgga agggatcatt accgagttac ccaaacccaa tgtgaacgtt     60
   accaaactgt tgcctcggcg gggtcacgcc ccgggtgcgt cgcagccccg gaaccaggcg    120
   cccgccggag gaaccaacca aactctttct gtagtcccct cgcggacgta tttcttacag    180
   ctctgagcaa aaattcaaaa tgaatcaaaa ctttcaacaa cggatctctt ggttctggca    240
   tcgatgaaga acgcagcgaa atgcgataag taatgtgaat tgcagaattc agtgaatcat    300
   cgaatctttg aacgcacatt gcgcccgcca gtattctggc gggcatgcct gtccgagcgt    360
   catttcaacc ctcgaacccc tccgggggat cggcgttggg gatcgggacc cctcacacgg    420
   gtgccggccc cgaaatacag tggcggtctc gccgcagcct ctcctgcgca gtagtttgca    480
   caactcgcac cgggagcgcg gcgcgtccac gtccgtaaaa cacccaactt tctgaaatgt    540
   tgacctcgga tcaggtagga cagccgttac acaccccact tctgaaatgt tgacctcgga    600
   tcaggtagga                                                           610

## Description

This invention relates to liquid and solid formulations based on filamentous fungi *Trichoderma,* as biological control agents, resistant to fungicides and commercial insecticides, for plant and cultivar diseases caused by phytopathogenic fungi. The invention describes a method to control transmission of plant and cultivar diseases caused mainly by phytopathogenic fungi, and methods to promote growth of plants and cultivars.

### BACKGROUND OF THE INVENTION

One of the great challenges of the new millennium, is the improvement of life quality with a healthy and varied nutrition, considering the impact of hard environmental conditions in addition to the pest losses that lead to nutrient scarcity in the world. Crop destruction by fungi and phytopathogenic pests are an important global problem chance and cause large production losses.

Those economic and human considerations, as well as new scientific technologies, have made necessary the development of direct control and preventive methods, important for future agricultural development. In this period, to stop or control diseases some strategies have been developed, which chemical treatments have been very useful in eradicate and control diseases, most of them caused by pathogenic fungi at cultivar, harvest or seed. Nevertheless, the extensive uses of chemical fungicides have increased the incidence of resistance in pathogenic populations, forcing increases in the chemical pesticide amounts to combat it.

The extensive use of chemical pesticides against environment, by its high toxicity, has exposed human populations to increasing levels. Some of them are potentially carcinogenic and responsible for 98% of the tumours produced by pesticides. Thus, actually some governments have adopted a new legislative policy to limit use, and gradually removal the most toxic (methyl bromide and derivates). By this way, the investments and studies pointing towards new strategies to pathogenic control that eliminate or reduce the pesticides amounts, are actually more than necessary, essential.

The biological control as a new strategy to control diseases of different cultivars began very many years ago, and now is taking this final aim. Actually, the biological pest control using antifungal compounds produced by fungi or other microorganisms, is now a common method.

As a systematic procedure, the application of biological control agents in plant diseases, begins with suitable screening of wild strains capable of be used in a specific way against different pathogen agents. This could be supported by a screening of strain producers of antibiotic or enzymatic activities that constitute the antagonist effect.

The search of formulations, culture media or cheap substrates to obtain better productions, is another necessary step to best efficacy of the biological control. The "biological control" term was used at first to define "the pathogenic population control by its natural enemies". Actually, the meaning of biological control, able to take in the new biotechnology developments, has been enunciated as: "we establish biological control as the use of natural or modified organisms, genes or gene products, to reduce the undesirable organisms and to protect the serviceable organisms to human, like cultivars, animals and profitable microorganisms". After a discussion about what biological control could be considered, it could be defined as the use of living microorganisms or their products to finish off the harmful activities of other organisms, in this case, pests or plant pathogens. It is carried out using control agents.

In agriculture, the main objective of biological control is to cut down pests and plant diseases through three principal objectives: *a)* reduction of pathogen inoculum reducing its viability between harvests *b)* reduction the host infection by pathogen and *c)* reduce the pathogen damages.

Biological Control does not eliminate the disease, but maintains the pathogen within the natural balance and this is the procedure where it must be applied. While chemical treatments eradicate the pathogen and its natural enemies, if it reappears, the damage caused is greater. Biological Control agents are selected from natural systems that usually have high specificity respecting the hosts. Biological Control can be durable, cheap and innocuous, furthermore, it can be used in different agriculture practices being profitable its application for all kind of cultures.

There is an enormous diversity of Biological Control agents, as antagonists: virus, bacteria, fungi, protozoa and even nematodes. Among all of them, micofungicides are the most used in phytopathology, more than a half of them are members of the Hyphomycetes group, within *Trichoderma* stands out.

Species of genus *Trichoderma* are an exceptional model of fungicide producers, they are widely distributed in all ecosystems, easily to isolate and culture, having fast growth in different soils and substrates, are mycoparasites, produce antibiotic and are good competitors for niches and nutrients.

Genus *Trichoderma* is a Deuteromycete belonging to the Hyphomycetes, characterized by its fast growth and green conidia in mass. It is characterized in having highly branched conidiophores (specialized hyphae for conidial development).

The use of *Trichoderma* strains in different strategies of biological control of phytopathogenic fungi, has been carried out successfully during several decades, despite of the available efficient commercial formulations based on these fungi, only have been made possible recently. WO 97/16974 discloses strains of Trichoderma harzianum and T.viride for the control of pathogenic fungi in plants. These strains are active against Fusarium oxysporum.

The use of *Trichoderma* strains has made possible the control of a wide variety of plant and cultivar pathogens. Most of the *Trichoderma* strains, with antagonist activity, shows high specificity. On the other hand, a *Trichoderma* strain could be or not an effective biological control agent, depending of the role in the pathogenic model.

The Biological Control procedures suggested in *Trichoderma* are: competence, antibiosis and mycoparasitisms.

The presence of genus *Trichoderma* in natural and agricultural soils all over the world, it is a proof that its an efficient competitor for niche and nutrients.

The antibiotic activity of *Trichoderma* was announced in 1934. *Trichoderma* produces several metabolites, especially antibiotic, that restricts growth of pathogenic organisms. These antibiotics penetrate in the pathogen cells causing inhibition by chemical toxicity. Trichodermine and Suzukamicine are two well-characterized examples with antibacterial and antifungal properties.

The first disclosure of the discovery of mycoparasitisms of *Trichoderma* in *Rhizoctonia* was in 1932. It was observed that the commonest mechanism is coiling up of antagonist hyphae around the pathogen, penetrating and growing into the cell. Also, it has been demonstrated that contact between both organisms is not precise. In both cases, there have been detected enzymes with hydrolytic activities over the pathogen cell wall. These enzymes produced by *Trichoderma* are mainly β-1,3 glucanases, β-1,6 glucanases, chitinases, cellulases and proteases.

*Trichoderma* must break-through the cell wall of the parasite in order to feed on its intracellular content. In addition to the physical barrier function, the cell wall plays the following roles: is responsible of the fungi cell form, allows osmotic integrity, acts like a filter for secretion and incorporation of substances and it is a carbon reserve, able to mobilize proper components in nutritional deficit situations.

The chemical composition of the fungal cell wall is relatively simple: carbohydrates, proteins, lipids, pigments and mineral salts, in decreasing order of abundance. Carbohydrates in form of homo or heteropolysacharides constitute more of 80% of the dry weight of the wall. These polysaccharides can be of two types, structural of the wall and soluble in water, with amorphous and granular appearance, without an apparent organization. Fibrillar polysaccharides are chitin and the (β-glucans, including cellulose.

Since the chitina and β-glucanes are the majority polymers of the wall, universal for all fungal groups, chitinases and β-glucanases are the principal enzymes in the mycoparasitic action.

To apply successfully Biological Control with this microorganism, must be considered three fundamental factors: a) *Trichoderma* can use simultaneously several mechanisms of action; b) not all the isolates of the same *Trichoderma* species have the same antagonistic capacity when they are used as Biological Control agents; c) the field treatment of the field with selective pesticides, steam, solarization and other sterilization methods, can modify the ecosystem to *Trichoderma* proliferation.

Once Biological Control fungus has demonstrated its capacity to control the disease caused by a pathogen, based in laboratory tests, greenhouse and field, the biomass production is the greater problem). Fermentations in liquid, semi-solid or solid media can be used.

Fermentation in solid state is defined as a fermentative process occurring in total or partial absence of free water, using natural and inert substrates as solid support.

The success in the biomass production of *Trichoderma,* go through the development of appropriate medium, which can be cheap and easily reasonable agricultural subproduct with a suitable nutrients balance. The use of the vegetal biomass in fermentative processes, like renewable resources and industrial raw material, represents one of the aspects with principal interest in biotechnology. Within the vegetal biomass, agricultural waste material constitutes more suitable lignocellulosic material on account of the low cost and easy availability. These substrata include molasses, flours of seeds (cotton, soybean, etc), straw, wheat, maize, barley, etc.

At the end of a liquid or solid fermentation, the biomass is collected together the substratum, which will provide a physical protection and a nutritive base, which will help to survive in the fungal soil conditions. In a solid fermentation, a high amount of hydrolytic enzymes and conidia with thickness wall and more nutritious reserves, are obtained.

After obtaining a suitable biomass, it is come to the formulation step. The problems to consider in this stage are as important as related with biomass production. A Biological Control formulation to apply in agriculture, must have several characteristics, like facility in preparation and application, stability, survival, abundant viable conidia, and low cost.

Several authors suggest that the suitable enzyme combination with complementary models of action, are able to increase the antifungal activity.

Also the synergy between hydrolytic enzymes and other antifungal agents has been studied. The use of purified antibiotic produced by *Trichoderma harzianum* along with hydrolytic enzymes, produced a synergic effects in the antifungal activity of *T. harzianum* against *Botritys cinerea.* A synergy was demonstrated between mixtures of commercial fungal consortia used against *B. cinerea,* and chitinolitic and glucanolitic enzymes of *T. harzianum.*

Integrated Pest Management (IPM) allows to control pathogens like *Botrytis cinerea, Sclerotinia sclerotiorum* and *Cladosporium fulvum* agents responsible to produce tomato and pumpkin leaf diseases, at the same time that reduce to 60% the amount of required pesticides. The greater levels of control of *B. cinerea* in grapevines are obtained with the joint application of *T. harzianum* T39 and chemical fungicides. Also, better levels of control of pathogens of turf grass with joint methods were obtained using *T. harzianum* 1245-22 strain, as a good competitor in the rhizosphere. All these data support the concept of search and selection of natural resistant strains to pesticides, to use within integrated pest management.

It is necessary to consider the chemical treatments. The application of incompatible pesticides can led us a considerable reduction of the inoculum and even can cause his total destruction. The use of some active matters must be restricted, even for leaf treatments, because a part of the pulverized solution over the leaves falls directly on the soil, another part drain out by washing or after falling leaves. The most toxic fungicides are benzimidazole, tiophanates, ditianone, triadimenole and triforine.

Fungicides as captan, procimidone and benclozolin do not inhibit the growth of *Trichoderma.* Other authors have taken advantage of the resistance of *T. harzianum* and *T. viride* to captan, for controlling *Verticilium dahliae* and *Sclerotium rolfsii* in tomato, respectively.

The use of microorganisms as promoters growth in plants is a well-known phenomenon, extended to bacteria (PGPR). In recent years, numerous scientific publications have demonstrated the potential growth capacity in fungi, emphasizing among species belonging to genus *Trichoderma.*

This capacity to increase plant growth with the application of species of genus *Trichoderma* to free pathogens soils, has been assayed in cucumber, peppers, tomatoes and beans cultures; as well as in ornamental plants like petunias and chrysanthemum. A diminution of seed germination period, increase germination percentage, diameter, dry weight and leaves area, as well as a height of the plants increase.

In sugar beet assays, seeding by the paper-pot technique, were applied by liquid formulation containing *Trichoderma* conidia, giving as result an increase of weight (14.6%) and the sugar content of the roots.

Factors conditioning the capacity to promote growth in plants of lettuce by *Trichoderma* are said to be the following: type of culture, the *Trichoderma* strain used, the inoculum concentration and application method. Also, in the control of secondary pathogens has been observed that, vitamin and hormones plants production or the conversion of nonassimilable material to other better assimilated states by plants, are important mechanisms to explain the stimulation or involution of these plants by certain microorganisms.

It has been demonstrated that some *Trichoderma* species facilitate the effect of mycorrhizic fungi, rhizobacteria and saprophytic bacteria, able to colonize roots and produce benefits in the cultures.

There are different possibilities to apply *Trichoderma* strains by use of conidia, mycelia or clamydospores, directly to ground or on aerial parts of the plant; separately or by means of a combination of the different colonial starters. The direct application is less effective, due to the conidia wall and mycelia are very thin, which causes that they lose viability by drying. The application with a carrier is used habitually in agriculture and made up of inert substances agronomically acceptable (alginate, kaolin, etc) can increase considerably the viability and effectiveness of these starters. Adjuvant, emulsifiers, agents of suspension, vegetal and mineral oils, can increase the adhesion of the starters and increase the antifungal activity against pathogens.

The *Trichoderma* formulations and the starters, can be applied as liquid or solid preparation, including helping components as emulsifiers, resuspendant products and adherent agents. The solid formulations can be powder, dry powder or granular, whereas liquid formulations can be displayed as water solutions, non-water solutions, suspension, dispersion or highly concentrated solutions.

The optimal conidia, mycelium or clamydospore concentration is from 10⁵ to 10⁹ colony-forming unit (CFU/g) in a solid formulation and 10⁵ to 10⁹ (CFU/ml) in a liquid formulation. ,

Finally, at the biofungicides industrial production exist problems to obtain sufficient biomass at commercial level, as well as to obtain a reproducible quality and the conservation and viability of the product It is desirable to obtain an optimal amount of biomass in less time as possible, since the increase of fermentation time reduces the viability and increases the risk of contamination.

### SUMMARY OF THE INVENTION

The invention consists in one or several solid and/or liquid formulations to soil and/or leaf application, that contains vegetative and sexual structures suspension (conidia, spores, mycelium and clamydospores) of five of the biological control strain agents of *Trichoderma* spp., isolated, characterized and deposited in the Spanish Type Culture Collection (CECT): CECT 20443, CECT 20444; CECT 20445; CECT 20447 and CECT 20481.

The five *Trichoderma* strains used in this invention, have demonstrated a potential antagonist effect against several phytopathogenic fungi responsible for plant and cultivar diseases. Some examples of pathogenic species controlled by *Trichoderma* strains used are: *Acremonium cucurbitacearum, Botrytis cinerea, Sclerotinia sclerotiorum, Verticilium dahliae, Rhizoctonia solani, Phoma betae, Fusarium oxysporum, Fusarium moniliforme, Thielaviopsis basicola, Pyricularia oryzae, Colletotrichum fragariae, Fusicoccum amygdali, Stereum purpureum,* and *Rosellinia necatrix.*

The formulations, includes the five *Trichoderma* selected strains, can be applied as liquid or solid preparation, including auxiliary components as emulsifying, resuspendant products and adherent agents. The solid formulations can be powder, dry powder or granular, whereas liquid formulations can be displayed as water solutions, non-water solutions, suspension, dispersion or highly concentrated solutions.

In these formulations the carrier-binding represent a nutritional reserve for the antagonist as well as the necessary protection that allow a good colony survival on soil or plant surface.

The optimal conidia, mycelium or clamydospore concentration is 10³ to 10⁹ colony-forming unit (CFU/g) in a solid formulation and 10³ to 10⁹ (CFU/ml) in a liquid formulation.

As well, different formulations can be applied with the five *Trichoderma* strains of this invention operating synergistically with the compatible chemical pesticides, in integral control programs, reducing those pesticides to 50% of the recommended concentrations.

In other aspects, the invention provides formulations comprising *Trichoderma,* spp. strains CECT 20443, CECT 20444., CECT 20445, CECT 20447, and CECT 20481 and a carrier.

In further aspects, the invention provides the use of *Trichoderma,* spp. strains CECT 20443, CECT 20444, CECT 20445, CECT 20447, and CECT 20481, or the use of the formulations as mentioned above, as biological control agents, for example of pests in plants and crops; in particular against pathogens, in particular against pathogenic fungi selected from *Acremonium cucurbitacearum, Botrytis cinerea, Sclerotinia sclerotiorum, Verticilium dahliae, Rlzizoctonia solani, Phoma betae, Fusarium oxysporum, Fusarium moniliforme, Thielaviopsis basicola, Pyricularia oryzae, Colletotrichum fragariae, Fusicoccum amygdali, Stereum purpureum,* and *Rosellinia necatrix.*

In further aspects, the invention provides methods of using, or the use of *Trichoderma,* spp. strains CECT 20443, CECT 20444, CECT 20445, CECT 20447, and CECT 20481 , or formulations as mentioned above, in combination with, or synergistically with, compatible chemical pesticides.

The invention further provides a method to the control and treatment of damping-off diseases in lettuce cultivars, caused by phytopathogenic fungi like *Sclerotinia* sp, *Rhizoctonia* sp and *Botrytis* sp.

The invention further provides a method to the control and treatment of *Dematophora necatrix* in olive trees.

The invention further provides a method to the *Trichoderma* strains application in the *Thielaviopsis basicola* control in cyclamen and poinsettia cultivars.

### DETAILED DESCRIPTION OF THE INVENTION

The inventors have directed their investigating efforts to isolate several *Trichoderma* strains able to surpass the difficulties disclosed in the previous paragraphs, which have been culminated with the discovery of five new strains, well characterized from a morphologic, physiological, biochemical and molecular point of view, able to grow and to sporulate quickly.

Since each *Trichoderma* strain is extremely specific against particular pathogens, the application of the five strains in a fungal association, within the same formulation, increases the success possibilities of the product under different environmental and pathogenic conditions. Therefore, in agreement with the present invention, liquid and solid formulations with organic and inorganic nutrients, as well as adjuvant, that contain the vegetative and reproductive structures of the five strains of filamentous fungus *Trichoderma,* subject of this patent, are provided. This invention is described detailed in the following sections of this description.

### Isolation of different Trichoderma strains of this invention

The five *Trichoderma* strains subject of this patent, were isolated and selected from soil samples and healthy host, from different geographic areas, following the method described in Elad *et al.,* (1981). In the laboratory monosporic cultures were obtained.

The isolated strains were conserved in 25% glycerol and stored at -80°C. The strains were easily recovered in potato dextrose agar (PDA), corn meal agar (CMA), and malt extract agar (MEA).

The strains subject of this patent were deposited at the "Colección Española de Cultivos Tipo" (CECT). Table 1 shows internal strain code lab, CECT number assigned and date of deposit.

**TABLE 1**

| Internal Code | CECT Number | Date |
|---|---|---|
| A3 | 20443 | 11 October 2001 |
| B5 | 20444 | 11 October 2001 |
| C7 | 20445 | 11 October 2001 |
| F2 | 20447 | 11 October 2001 |
| T18 | 20481 | 14 April 2002 |

### Morphological Characterization

Morphological features were studied from monoconidial PDA, CMA and MEA cultures. Cultures were incubated at 25°C, in the darkness during 14 days. Mycelium, presence of clamydospores (terminal or intermediate), phialidic and conidial development were studied in blue-cotton-lactophenol glass-slides for microscopical observation.

All the strain have complex conidiophores (specialized hyphae where the conidia development occurs), with several series of branches in right angle, thus each set of ramifications has a pyramidal form similar to a small shruB. All of these features are characteristics for all species belonging to genus *Trichoderma.*

### Physiological and Metabolic Characterization

### Carbon sources assimilation

The assimilation of carbon sources from all five strains was studied. The carbon sources assayed were the following: glucose (LBGL), lactic acid (LBAL), citric acid (LBCA), ammonium oxalate (LBAO) and ammonium tartrate (LBAT).

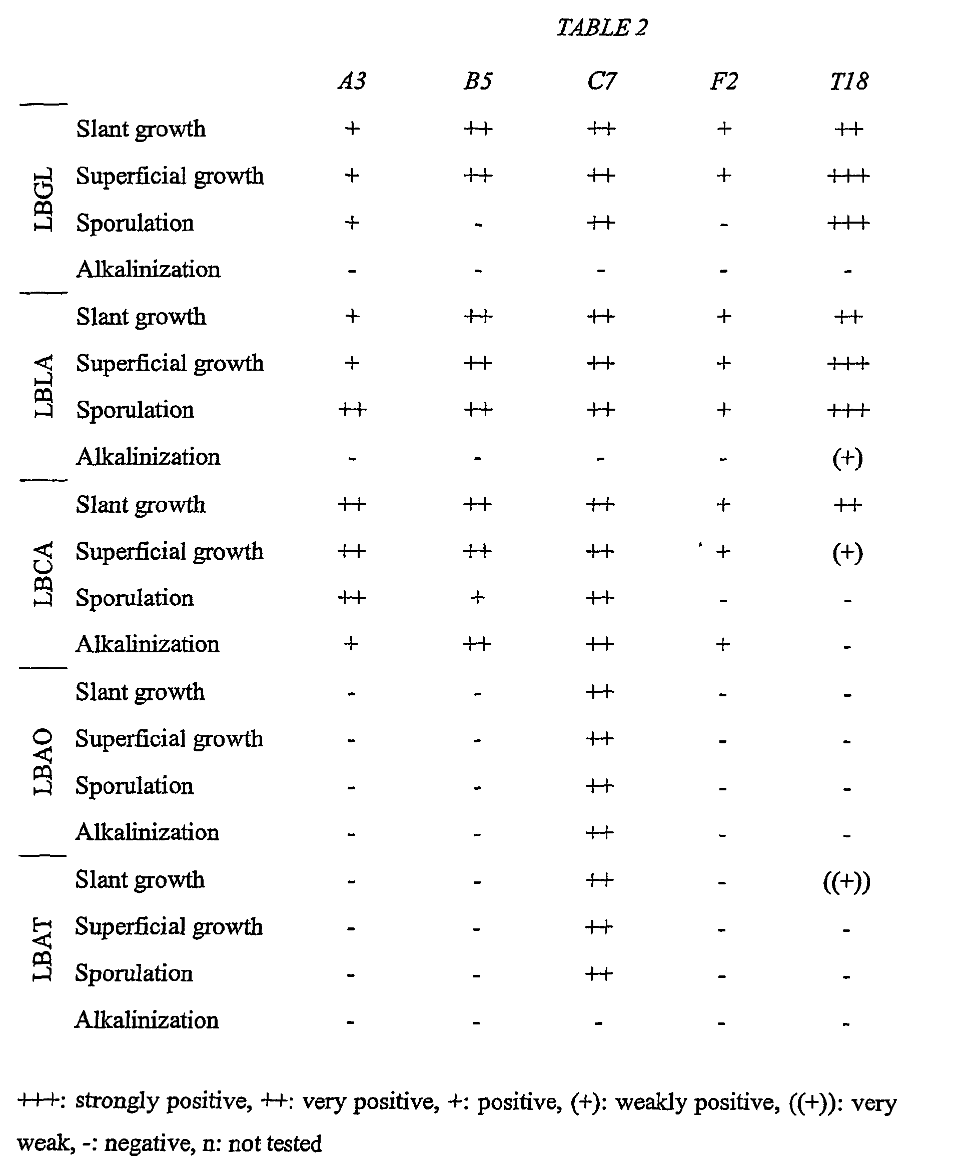

Lynch B liquid media (NH₄H₂PO₄ 1 g/l, KCl 0.2 g/l, MgSO₄.7H₂O 0.2 g/l, CuSO₄.5H₂O 5 mg/l y ZnSO₄.7H₂O 10 mg/l) were used, containing 0.05 g/l bromocresol-purple, which were added with the studied carbon source at 1% (w/v). pH was adjusted to 6 and media were aliquoted in 10 ml per tube. All the carbon sources were sterilized. 0.5 cm 2% water-agar plugs of this strain were used as inoculum. All experiments were made in triplicate. Results were observed after incubation in darkness at 25°C during 14 days.

Only C7 strain is able to assimilate ammonium oxalate and ammonium tartrate like carbon sources.

### Nitrogen sources assimilation

The assimilation of nitrogen sources of all five strain was studied. The nitrogen sources assayed were the following: creatine (LACR), ammonium oxalate (LAAO), sodium nitrate(LANI), glycine (LAGY) and urea (LAU).

Lynch A liquid media (KH₂PO₄ 1 g/1, KCl 0.5 g/l, MgSO₄.7H₂O 0.2 g/1, CaCl₂.2H₂O 0.1 g/l and sucrose 10 g/1) were used, containing 0.05 g/l bromocresol-purple, which were additioned with the studied nitrogen source at 0.2% (w/v). pH was adjusted to 6 and media were aliquoted in 10 ml per tube. All the nitrogen sources were sterilized. 0.5 cm 2% water-agar plugs of this strain were used as inoculum. All experiments were made in triplicate. Results were observed after incubation in darkness at 25°C during 14 days.

All the strains are able to assimilate the different nitrogen sources assayed, except A3·which incapable to metabolize sodium nitrate as nitrogen source.

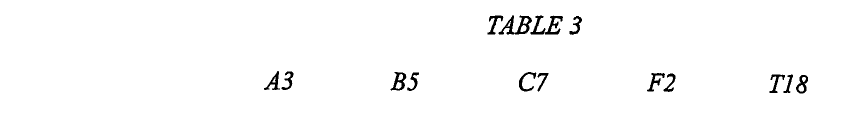

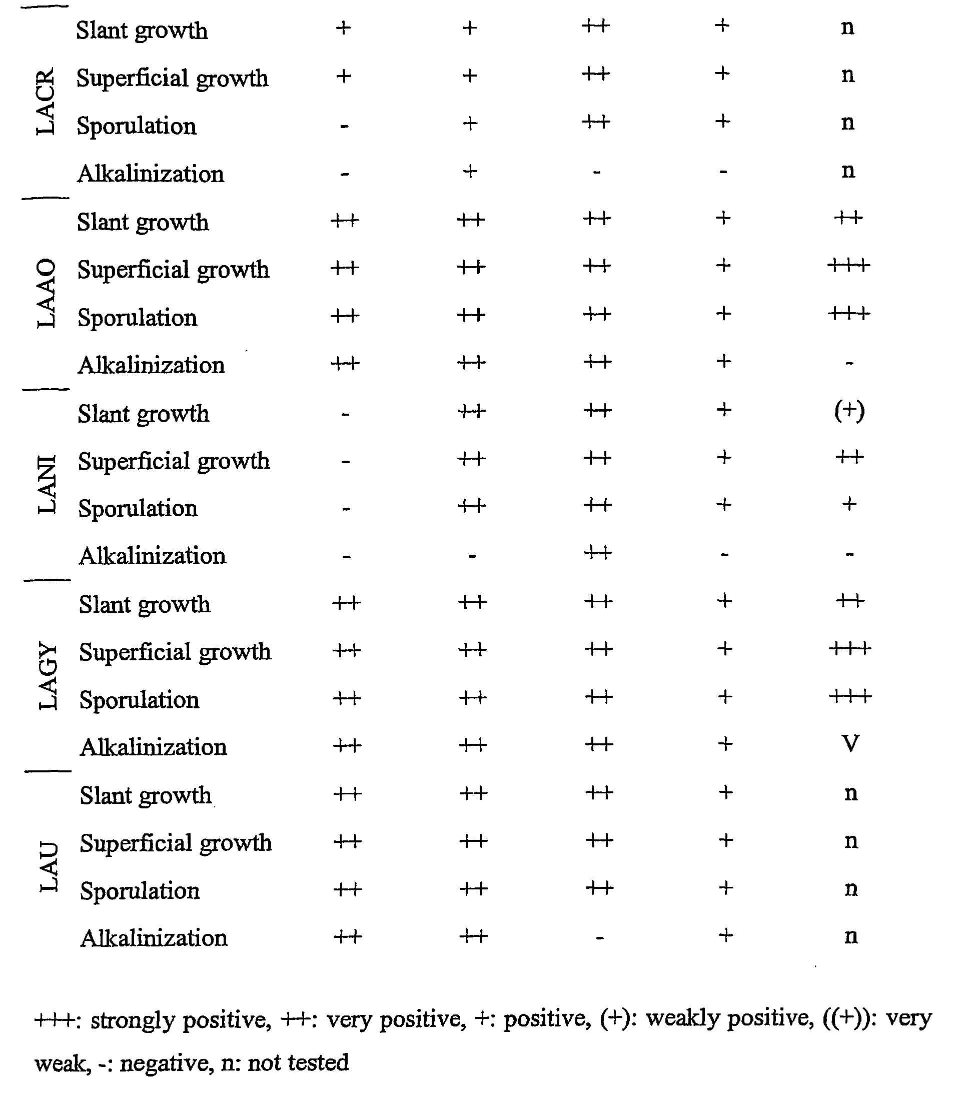

### Growth in different microbiological culture media

Cultural characterization for all five *Trichoderma* strains were studied, in the following culture media: water-agar (WA), malt extract agar (MEA), corn meal agar (CMA), CZ NH₄ agar, glycerol nitrate agar (G25N), nitrite saccharose agar (NSA).

Plates with all previously cited media were inoculated with 0.5 cm 2% water-agar-plugs of each strain, incubated in darkness at 25°C during 14 days. Experiments were made in triplicate.

The results are shown in table 4.

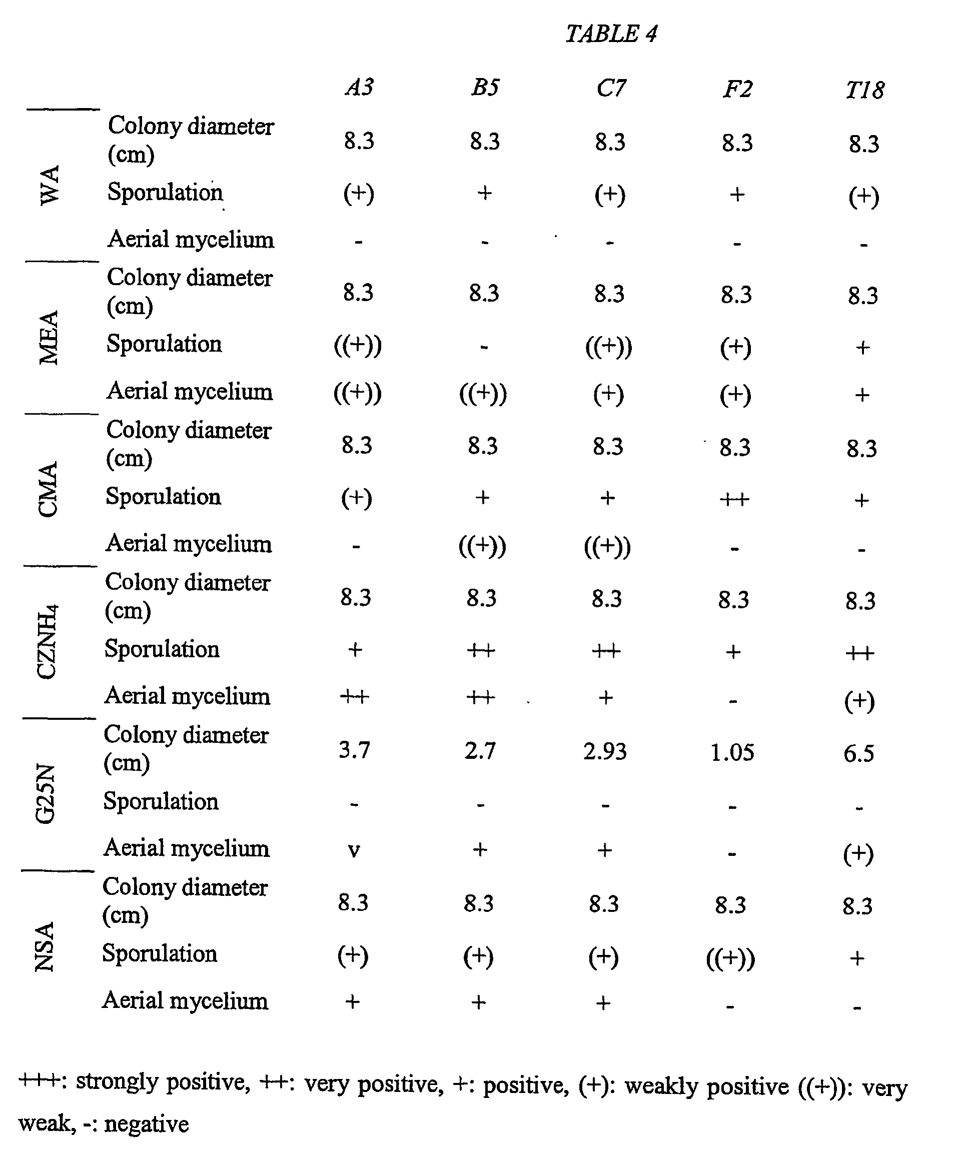

### Effect of chemical growth inhibitors

The influence of cupric sulphate, zinc sulphate, crystal violet, in all five *Trichoderma* strains were studied. The following concentrations were assayed:
- Crystal Violet: 0.2 g/l and 0.04 g/l
- Cupric Sulphate : 0.5 g/l
- Zinc Sulphate: 3 g/l
   Solutions of these chemical agents, were sterilized by filtration (Millipore HA of 0.45 µm in diam.) and were added to flasks containing 250 ml of sterilized Lynch B agar medium. Media with different concentrations, were dispensed in Petri dishes and once solidified were inoculated with 2% water-agar plugs of the different *Trichoderma* strains. The experiments were made in triplicate. Plates were observed after 24, 48 hours and 14 days after incubation in darkness at 25°C.

### • Cupric sulphate:

Neither of the five strains growth in Lynch B media supplemented with cupric sulphate.

### • Crystal violet

Neither of the five strains growth in Lynch B media supplemented with crystal violet at different concentrations.

### • Zinc sulphate

Only A3, F2 and T18 strains growth in Lynch B medium supplemented with zinc sulphate at the five concentrations assayed. Microorganisms growth forming smooth and transparent colonies, without aerial mycelium and absence of sporulation or pigment production. Table 5 shows colonies diameters in Lynch B medium with 3 g/l of zinc sulphate, after 24, 48 hours and 14 days of incubation in the darkness at 25°C.

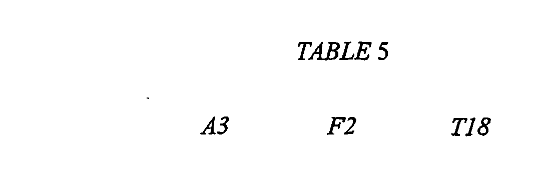

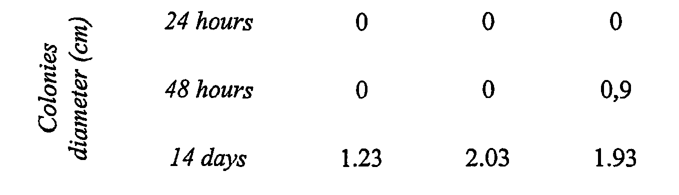

### Gelatine hydrolysis

Gelatine hydrolysis and sporulation of the five strains were studied in a gelatine rich medium, after 10 days of incubation.

Gelatine rich medium (Sucrose 10 g/l, Gelatine 120 g, CuSO₄.5H₂O 5 mg/l and ZnSO₄.7H₂O 10 mg/l, stock solution A 50 ml/l, stock solution C 50 ml). Composition for stock solution A: NaNO₃ 40 g/l, KCL 10g/l, MgSO₄.7H₂O 10 g/l, FeSO₄.7H₂O 0.2 g/l and stock solution C: K₂HPO₄ 20 g/l).

Media was sterilized and dispensed in flasks, and after inoculated with 0.5 cm 2% water-agar plugs, of the five strains. Resulting plates were incubated in darkness at 25°C during 10 days. Finished the incubation time, flasks were stored at 4°C for one hour and later results were written as follows.

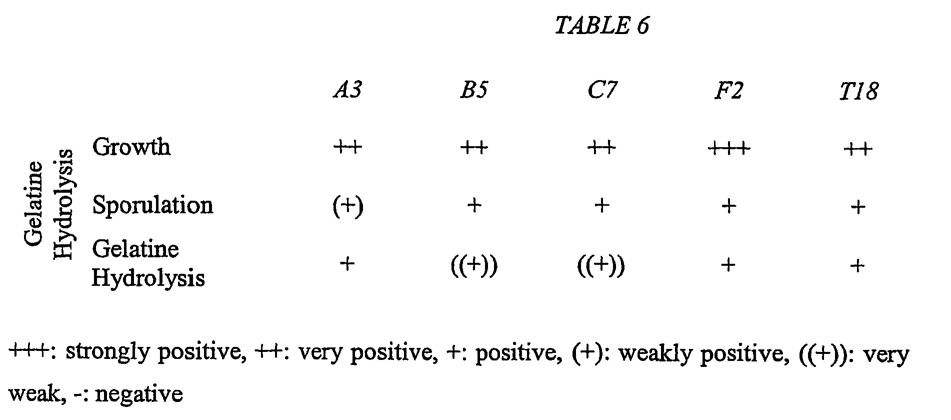

Table 6 shows results after 10 days of incubations in gelatine medium for the five strains.
- A3 strain produce a positive gelatine hydrolysis, showing clear medium liquefaction.
- B5 strain produce very weak hydrolysis (light liquefaction).
- B7 strain produce very weak hydrolysis (light liquefaction).
- F2 strain produce a positive gelatine hydrolysis, showing clear medium liquefaction.
- T18 strain produce a positive gelatine hydrolysis, showing clear medium liquefaction.

### Esculin hydrolysis

Esculin hydrolysis of the five strains were studied. Petri dishes with esculin agar medium were inoculated with 0.5 cm 2% water-agar plugs of the *Trichoderma* strains. Cultures were incubated in darkness at 25°C during 10 days. The experiment was made in triplicate.

The hydrolysis reaction is considered positive when black colour appears in the reverse of the plates. The hydrolysis release glucose and esculetin (substance that in interaction with ferric ion produces black precipitating that stain the medium).

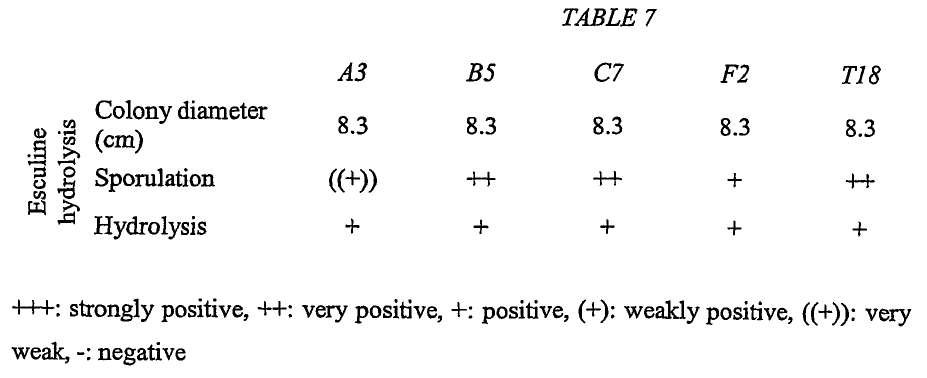

All strains shown a positive esculin hydrolysis reaction. However, differences at sporulation process were observed, being very weakly in A3 strain, positive in F2 strain and strongly positive in B5,C7 and T18.

### Lipases Hydrolysis

Lipases hydrolysis were studied for the five strains. Basal medium TWH (fungal peptone 10 g/l, NaCl 5g/l, CaCl₂.2H₂O 0.1 g) containing bromocresol purple 0.025g/l, agar at 2% (w/v) and 100 ml of Tween 80 at 10% (v/v) solution. pH was adjusted to 6 and was autoclaved. Medium was dispended in Petri dishes, which were inoculated with 0.5 cm 2% water-agar plug of the *Trichoderma* strains. Cultures were incubated in darkness at 25°C during 14 days. The experiment was made in triplicate.

The hydrolysis reaction is consider as positive when the medium turns out blue, as well as white crystalline ring appears under the colonies. Table 8 shows the results after 14 days incubation.

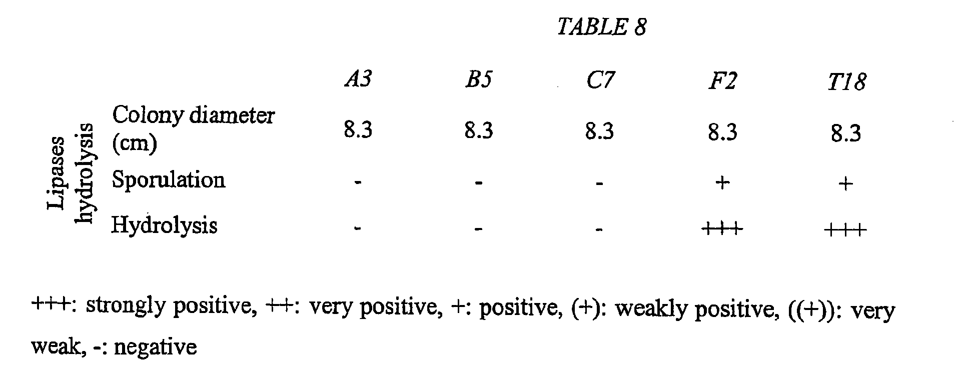

- Only F2 and T18 strains shows a positive reaction in the lipase hydrolysis test.
- Only F2 and T18 strains sporulated in TWH medium.

### Urease test

Growth capacity in a medium containing urea was tested in the five strains. To carry out the test Lynch B medium supplemented with 2 % (w/v) urea, 1 % (w/v) glucose, 2% (w/v) agar and 0.05 g/l of purple bromocresol was prepared. The medium was sterilized and dispensed in petri dishes. The same medium without urea was used as control. Plates were inoculated with 0.5 cm diam. water-agar (2%) plugs of the *Trichoderma* strains. Petri dishes were incubated in darkness at 25°C for 14 days. The experiment were made in triplicate.

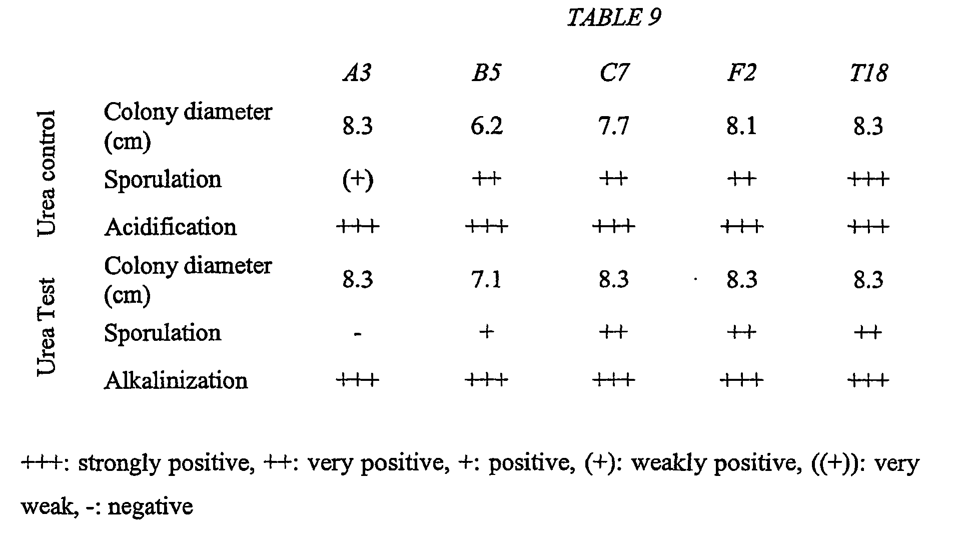

- All the strains shows a positive reaction in the unease test.

### Trichoderma strains tolerance to pH extreme values

The faculty of the five *Trichoderma* strains to growth in media with extreme pH values were studied, in acid media (pH 2), as well as in basic media (pH 10). The experiment was carried out using CZ pH 2 medium (Stock CZ solution A 50 ml/1, K₂HPO₄ 1 g/1, Sucrose 30g/1, citric acid 10.5 g/l, CuSO₄.5H₂O 5 mg/l and ZnSO₄.7 H₂O 10 mg/l,) and CZ pH 10 (Stock CZ solution A 50 ml/1, Glycine 3.75 g/1, K₂HPO₄ 0.2 g/l, Sucrose 30 g/1, CuSO₄.5H₂O 5 mg/l and ZnSO₄.7 H₂O 10 mg/l) both media complemented with purple bromocresol 0.05 g/1. The stock solution A composition: NaNO₃ 40 g/1, KCI 10 g/l, MgSO₄.7H₂O 10 g/l, FeSO₄.7H₂O 0.2 g/l.

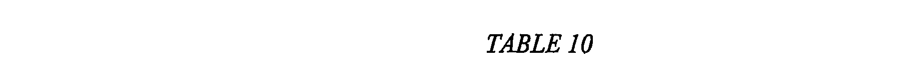

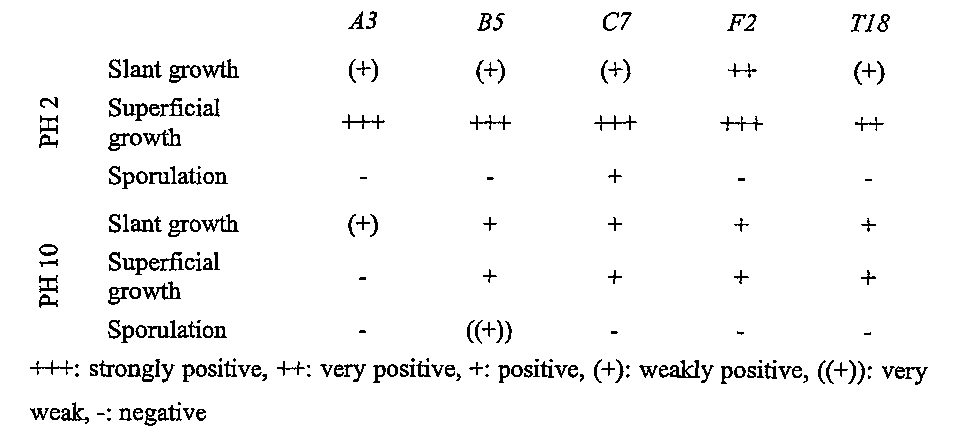

Sporulation was not observed for any of the pH assayed. However, a positive superficial slant growth was observed.

### Conidia heat resistance of the five Trichoderma strains

With the aim of testing the conidial heat tolerance of the five *Trichoderma* strains, a test was made heating at 75°C during 5 minutes. Cultures on MEA or PDA grown for 8 days. After sporulation, 5 ml of a sterilized 0.2 % (v/v) Tween 80 solution was added. Petri dishes were shaken lightly helping the conidial diffusion. At the same time, test tubes was prepared adding 1 ml of 0.2 % (v/v) Tween 80 solution and autoclaved. Once cooled, tubes were heated in a water bath at 75°C for 30 minutes, to stabilize the temperature. Each tube was inoculated with 100 µl of the conidial suspension and was kept for 5 additional minutes at 75°C in a water bath. Conidial survival was determined after all this process by streaking MEA or PDA plates. Petri dishes were incubated in darkness at 25°C for 7 days. The experiment were made in sextuplicate.

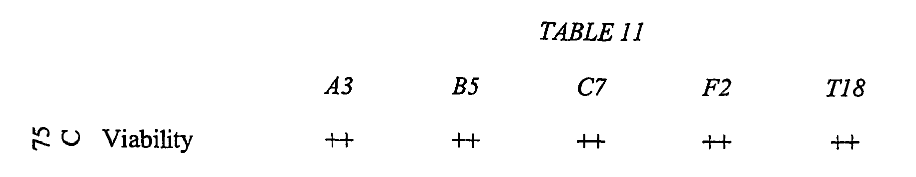

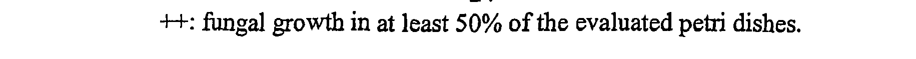

Conidial germination for all strains after the thermal treatment at 75°C for 5 min. was observed.

### Biochemical characterization

### Enzymatic activities using API-ZYM strips

API-ZYM system (Biomérieux S.A., Marcy-l'Etoile, France) is a semiquantitative kit for enzymatic activity detection, which allows a rapid detection of up to 19 enzymatic activities, from small amounts of sample. API-ZYM strips are composed of 20 microtubes that contains a buffer with an enzymatic substrate.

The following enzymatic activities were studied: Phosphatase alkaline, esterase, esterase lipase, lipase, leucine arylamidase, valine arylamidase, cystine arylamidase, trypsin, α-chymotrypsin, phosphatase acid, naphtol-AS-BI-phosphohydrolase, α-galactosidase, β-galactosidase, β-glucuronidase, α-glucosidase, β-glucosidase, N-acetyl-β-glucosaminidase, α-manosidase y α-fucosidase.

Inoculated samples in the API-ZYM strips were *Trichoderma* (five strains) cultures supernatants grown in darkness, at 25°C for 9 days in GYM medium.

The reading of the strips, valued from 0 to 2. Table 12 shows the results of the enzymatic activity test.

**TABLE 12**

| | A3 | B5 | C7 | F2 |
|---|---|---|---|---|
| Phosphatase alkaline | 2 | 2 | 2 | 1 |
| Esterase | 2 | 2 | 2 | 1 |
| Esterase lipase | 2 | 2 | 2 | 1 |
| Lipase | 1 | 1 | 2 | 1 |
| Leucine arylamidase | 2 | 2 | 2 | 1 |
| Valine arylamidase | 2 | 2 | 2 | 1 |
| Cystine arylamidase | 1 | 2 | 1 | 1 |
| Trypsin | 1 | 2 | 1 | 1 |
| α-chymotrypsin | 2 | 2 | 2 | 1 |
| Naftol-A-S-BI-phosphohydrolase | 2 | 2 | 2 | 1 |
| α-galactosidase | 2 | 2 | 2 | 1 |
| β-galactosidase | 2 | 2 | 2 | 1 |
| β-glucuronidase | 0 | 2 | 0 | 1 |
| α-glucosidase | 2 | 2 | 2 | 1 |
| β-glucosidase | 2 | 2 | 2 | 0 |
| N-acetyl-β-glucosaminidase | 2 | 2 | 2 | 1 |
| α-manosidase | 1 | 2 | 2 | 1 |
| α-fucosidase | 0 | 0 | 0 | 0 |

| | | | | |
|---|---|---|---|---|
| 0 corresponds to a negative reaction (colourless), 2 to a reaction of maximum intensity (violet, orange, blue or brown, depending on the enzymatic activity) and 1 corresponds to an intermediate reaction. | | | | |

### Extracellular enzymatic activities

The following extracellular enzymatic activities were determined: β-1 ,3-glucanases, β-1,6-glucanases, β-1,4-endoglucanases (CMCases) and exochitinases for the five *Trichoderma* strains grown in GYM, GYM-CMC and LB-CMC media. (GYM: glucose 10g/l, NH₄H₂PO₄ 1g/l, KCl 0.2g/l, MgSO₄.7H₂O 0.2g/l, CuSO₄.5H₂O 5 mg/l and ZnSO₄.7H₂O 10 mg/l, yeast extract 5g; GYM-CMC is a modification of the GYM medium, changing glucose by carboximethylcellulose (CMC, medium viscosity Sigma) at 1%); LB-CMC (NH₄H₂PO₄ 1g/l, KCI 0.2g/l, MgSO₄.7H₂O 0.2g/l, CuSO₄.5H₂O 5 mg/l and ZnSO₄. H₂O 10 mg/l, carboximethylcellulose at 1%), in darkness at 25°C during 9 days without shaking.

### β-1,3 glucanase activity

It is determined at 37°C, in a reaction containing 0.2 ml of a Laminarin solution (β-1,3-glucane proceeding from the red seaweed *Laminaria hyperborea,* Sigma) at 0.5 % (in acetic buffer/acetate 100 mM at pH 5.2) and 0.1 ml of the enzymatic solution properly diluted. The reaction mix is incubated during one hour and reaction is stopped by heating at 100°C for 7 minutes.

Sugar concentration is determined on a 0.5 ml of reaction mix by Somogyi's (1952) and Nelson's (1957) method, using glucose at 0 to 1 mg/ml as standard.

An enzymatic activity unit of β-1,3-glucanase is defined as the amount of enzyme able to produce one micromole of glucose equivalents per minute in test conditions.

Sugar determination is made as follows: 0.15 ml of Somogyi I: Somogyi II (4:1) solution is added to 0.15 ml of the sample. The mixture is boiled for 10 minutes and then ice cooled, 0.15 ml of a Nelson solution is added and strongly shaken in order to help CO₂ removal. Finally, mixture is diluted in 1.5 ml of distilled water and absorbance at 540 nm is read in a microplate reading luminometer (Elx 800, Bio-Tek Instruments, Inc).

The following solutions were used:
*Somogyi I solution:* 15 g of sodium potassium tartrate and 30 g of anhydrous Na₂CO₃ are diluted in 300 ml of distilled water. 20 g NaHCO₃ are added afterwards. In a different tube 180 g of anhydrous Na₂SO₄ is diluted in 500 ml of distilled water heating without boiling in order to remove air formed. Once cooled the later solution is added to the former and the volume up to 1 litre is filled with distilled water. Final mixture is conserved at room temperature.
*Somogyi II solution:* 2 g of CuSO₄.5H₂O and 18g of anhydrous Na₂SO₄ are dissolved into 100 ml of distilled water. Reagent is preserved at room temperature.
*Nelson solution:* 12.5 g of ammonium molybdate.4 H₂O is dissolved into 225 ml of bidistilled water, afterwards 10.5 ml of concentrated H₂SO₄ was added while shaking. 1.5 sodium arsenate is diluted in 12.5 ml of bidistilled water and mixed with the former mixture. This mixture is preserved from light at room temperature after storing it at least 48 hours at 37°C.

Results of β-1,3-glucanase enzymatic activity (IU/ml) corresponding to the five *Trichoderma* strains are shown in table 13 for three different culture media (GYM, GYM-CMC and LB-CMC).

**Table 13**

| *β-1,3-glucanase activity (IU*/*ml)* | | | |
|---|---|---|---|
| | *GYM* | *GYM-CMC* | *LB-CMC* |
| *A3* | 0.680 | 1.020 | 1.528 |
| *B5* | 1.115 | 1.471 | 1.865 |
| *C7* | 0.714 | 0.899 | 1.441 |
| *F2* | 1.223 | 1.318 | 2.317 |
| *T18* | 0.051 | 0.585 | 1.272 |

### β,1,6 glucanase activity

The β-1,6-glucanase activity is determined at 37°C, the reaction mix contents are: 0.2 ml of a Pustulan (β-1,6-glucan from *Umbillicaria papulosa,* Calbiochem, USA) 0.5% solution (in a potassium acetate 50 mM buffer, pH 5.5) and 0.1 ml of an enzymatic solution appropriately diluted. The mixture is incubated for an hour and the reaction is stopped heating at 100°C for 7 minutes. Finally sugars concentration is determined in 0.15 ml of the mixture following the Somogyi-Nelson method (formerly described), using glucose at 0 to 1 mg/ml as standard.

An enzymatic activity unit of β-1,6-glucanase is defined as the amount of enzyme able to produce one micromole of glucose equivalents per minute in test conditions.

Results of β-1,6-glucanase enzymatic activity (IU/ml) corresponding to the five *Trichoderma* strains shown in table 14 for three different culture media (GYM, GYM-CMC and LB-CMC).

**Table 14**

| *β-1, 6-glucanase activity (IU*/*ml)* | | | |
|---|---|---|---|
| | *GYM* | *GYM-CMC* | *LB-CMC* |
| *A3* | - | 0.523 | - |
| *B5* | - | 0.853 | 0.132 |
| *C7* | - | 0.385 | - |
| *F2* | - | 0.271 | 0.529 |
| *T18* | - | - | 0.139 |

In the figures: 3T and E1 are two *Trichoderma* strains used as internal control

### Cellulosic activity (β-1,4-endoglucanase)

The activity is determined at 37°C, the reaction mix contents are: 0.2 ml of carboxymethylcellulose (0.5% solution in potassium acetate 50 mM buffer pH 5.5) and 0.1 ml of an enzymatic solution appropriately diluted. The mixture is incubated for one hour and the reaction is stopped by heating at 100°C for 7 minutes. Finally, sugars concentration is determined in 0.15 ml of the mixture following the Somogyi-Nelson method (formerly described), using glucose at 0 to 1 mg/ml as standard.

An enzymatic activity unit of β-1,4-endoglucanase is defined as the amount of enzyme able to produce one micromole of glucose equivalents per minute in test conditions.

Results of β-1,4-endoglucanase enzymatic activity (IU/ml) corresponding to the five *Trichoderma* strains are shown in table 15 for three different culture mediums (GYM, GYM-CMC and LB-CMC).

**Table 15**

| *β-1,4-endoglucanase activity (IU*/*ml)* | | | |
|---|---|---|---|
| | *GYM* | *GYM-CMC* | *LB-CMC* |
| *A3* | - | 0.051 | 0.143 |
| *B5* | - | 0.089 | 0.114 |
| *C7* | - | 0.004 | 0.045 |
| *F2* | - | - | 0.117 |
| *T18* | - | - | 0.137 |

### Exochitinase (β-N-acetylglucosaminidase) activity

This enzyme hydrolyses the monomer units of the chitin from an end. It is calculated measuring the nitrophenol liberation from the p-nitrophenil-β-D-N-acetylglucosaminida (Sigma).

The reactions mixture containing 0.05 ml of a p-nitrophenil-β-D-N-acetylglucosaminidase solution (0.3 mg/ml potassium phosphate KHPO₄ 50 mM buffer, pH 6.7) and 0.03 ml of the enzymatic solution appropriately diluted is prepared. The plate is incubated for 15 minutes at 50°C and the reaction stops adding 0.05 ml of Na₂CO₃ 0.4 M. The evaluation is made measuring the absorbance using 96-well plates luminometer at 410 nm. The enzymatic activity comes given by: A = Absorbance x dilution factor

Table 16 shows the results of the exochitinase enzymatic activity corresponding to all five *Trichoderma* strains in GYM, GYM-CMC and LB-CMC culture media.

**TABLE 16**

| *Exochitinase Activity* | | | |
|---|---|---|---|
| | *GYM* | *GYM-CMC* | *LB-CMC* |
| *A3* | 9.00 | 0.93 | 1.14 |
| *B5* | 7.54 | 0.84 | 0.80 |
| *C7* | 7.08 | 0.67 | 0.72 |
| *F2* | 7.48 | 1.33 | - |
| *T18* | 15.76 | 1.27 | 2.93 |

### Molecular characterization

*Trichoderma* strains subject of this patent, are natural isolates, without additions or deletions in the DNA, genomes have not been modified. However, the strong morphological similarities existing within the species belonging to the genus *Trichoderma* make very difficult a correct identification and the discrimination within the agents of biological control. The morphologic methods (Stasz *et al.,* 1988) have shown to be not enough resolutive for: a) To differentiate and to characterize industrial strains directed for patents or commercialisation. b) To control the genetic purity of the agents of biological control during the industrialization processes. c) To monitor the persistence of antagonistic strains once they are released in the soil and after several successive treatments. d) The fight against fraud and in facing possible litigations of industrial rights.

A great advance was the development of techniques based on the analysis of biochemical criteria, also known by biochemical markers, which has allowed to surpass some of the pointed problems. However, these techniques presented the disadvantage of not being sufficiently repetitive and decisive for strain differentiation.

Actually, in order to solve some of these difficulties, the use of molecular criteria based on the analysis of nucleic acid (DNA) has been increased, looking for differences in the fungal genome, agents of biological control, which could be used like stable and feasible molecular markers, allowing the unequivocal identification of the strains at issue.

In order to observe differences in the DNA of these organisms, it is necessary to resort a set of appropriate techniques. Of all available techniques, one of the most important and with greater application is the polymerase chain reaction (PCR) described by Mullis and Fallona (1986).

One of the potential methodologies in determination and identification, is the use of molecular markers at genomic level, mostly those based on the amplification of DNA fragments or genes with a specific highly conserve sequence, using PCR. In the specific case of filamentous fungi, and in this case for species belonging to genus *Trichoderma,* the gene encoding for ribosomal ribonucleic acid (rRNA) that is highly conserved, being very similar through different related species. Nevertheless, the adjacent regions to the 5.8s subunit, which are named ITS regions (Internal Transcribed Spacer ITS1 and ITS2), allow us to establish important and precise differences at infraspecific level. These regions can be amplified by ITS 1 and ITS4 primers (Kuhls *et al.,* 1996).

A necessary condition for molecular characterization of *Trichoderma* strains is working with genetically pure populations, considering the great phenotypic variability exhibited by the fungal isolates cultured in laboratory.

### Genomic DNA extraction

Genomic DNA extraction from the *Trichoderma* strains was made following the method proposed by Raeder and Broda (1985) with some modifications. Solid media: For maintaining fungal cultures and starters, plates prepared with PDA medium (Potato Dextrose Agar, Sigma-USA) 0.5 cm agar plugs were transferred at the centre of the plate using an sterile cloning cylinder, coming from other live-fungal culture. Afterwards, plates were incubated in darkness without shaking (incubator), at 25°C, until total colonization.

Liquid media: Flasks with sterile PDB broth (Potato Dextrose Broth, Sigma-USA) are used. Later they are inoculated with a conidial suspension (10⁶ conidial/ml) coming from cultures grown in solid medium (PDA). Inoculated flasks were set in an orbital shaking incubator at 25°C and 250 rpm.

All glass, plastic or paper material was sterilized previously in an autoclave. Fungal mycelium was collected and filtered through a filter paper comet, later was washed several times with distilled sterile water until complete removal of agar remains. The biomass obtained was dried using sterile filter paper and was distributed in cryogenic vials for freeze-conservation.

50 mg of freeze dryed mycelium (freeze dryer, Telstar Cryodos) was crumbled in liquid nitrogen, on an ice bath. Myceliar dust was harvested in a microtube, and was homogenised into 0.5 ml of lysis buffer (SDS 0.5 %, Tris-HCl 200 mM, NaCl 250 mM, EDTA 25 mM; at pH 8.5). In order to remove proteins from the liquid phase, 350 µl of phenol were added (Phenolic solution: was prepared according to Sambrook *et al.,* 1989. Crystallized phenol (Merck) saturated with 1M Tris-HCl pH 8 buffer was used, in presence of 8-hydroxyquinoleine, and stored at 4°C, in a sterile topaz glass bottle) and 150 µl of isoamylic chloroform (chloroform and isoamylic alcohol were mixed in a 24:1 (v/v) proportion.), mixing carefully. Mixtures were centrifuged at 13000 rpm and 4°C, for 1 hour. The supernatant was transferred to a clean microtube, 500 µg of RNAse were added to it (10 mg/ml of pancreatic ribonuclease (Sigma) dissolved into 10 mM Tris-HCl and 15 mM NaCl buffer pH 7.5, and heated up to 100°C during 15 minutes in means of reactivating it and was aliquoted and conserved at -20°C), later it was incubated during 30 minutes at 37°C. An equivalent volume of isoamylic chloroform was added and mixed. After centrifuging for 10 minutes at 13000 rpm, at room temperature, the supernatant was transferred to a clean microtube. DNA was precipited, adding 0.1 volumes of sodium acetate 3M pH 5 and 2.5 volumes of 96% (v/v) ethanol at 20°C. The pellet obtained by centrifugation at 13000 rpm during 10 minutes at 4°C, was washed with cold 70% (v/v) ethanol, and dried to the air and suspended into 100 ml of TE buffer (10:1) (10 mM Tris-HCl; 1 mM EDTA, pH 8). Genomic DNA samples were stored at -20°C.

### Genomic DNA quantification and purity

Genomic DNA quantification, as well as its purity was measured by spectrophotometric techniques, following the protocol described in Sambrook *et al.* (1989). 1/100 dilutions of the genomic DNA samples were made with distilled water. Later, absorbances at wavelengths λ=260 nm and λ=280 nm were registered respectively. DNA purity was confirmed by dividing both absorbance values, the result must be higher or equal to 1.8. The amount of genomic DNA contained in the samples, was determined considering that when absorbance λ=260 nm equals 1, the quantity of double stranded genomic DNA is 50 µg/ml (Sambrook *et al.,* 1989).

### Amplification of the ITS region using PCR

The following primers were used:
*ITS1: 5'-TCG GTA GGT GAA CCT GCG G-3'*
*ITS4: 5'-TCC TCC GCT TAT TGA TAT GG3 '*

Primers are oligonucleotides that enable the binding of the DNA polymerase enzyme over the DNA template. They are automatically synthesized by Roche Biochemicals, and are provided freeze dryed. In our laboratory were resuspended into MiliQ (Millipore) water at 50 µM final concentration and then aliquoted in several tubes and stored at -20°C.

### Amplification conditions

PCR amplification of the ITS region, was performed using ITS1 and ITS4 primers with a Ptc-100 of MJ Research thermal cycler which incorporates a heated lid to avoid evaporations, using DNA polymerase enzyme (Echo Taq Biochemical) and following the protocol described in White *et al.* (1990) modified. The reagents for the PCR reaction are shown in Table 17:

| Reagents | Volume | Final concentration |
|---|---|---|
| MiliQ sterile water | - | Up to 50 µL |
| Buffer 10X | 5µL | 1 X |
| MgCl2 (50 mM) 10X solution | 1.5 µL | 1 X |
| Nucleotide mixture 12.5mM | 1 µL | 200 µM each one |
| ITS 1 and ITS4 (50 µM) primers | 0.4 µL | 0.4 µM each one |
| Eco Taq polymerase (5U/µL) | 1 µL | 1 U/ 50 µL V final |
| Genomic DNA template | - | 1 µg |

All the reagents were added following the order shown in Table 17 and mixed in 200 µL PCR microtubes. All was done in complete sterile conditions, as well as ice to prevent DNA denaturation, annealing of the primers and premature enzymatic activity.

Reaction mixture was centrifuged during 5 seconds and incubated in the thermal cycler for 5 minutes at 95°C (initial denaturation step), later 40 cycles were programmed following the steps below:
- Denaturation of the double stranded DNA 1 min at 95°C
- Hybridization of the primers to the DNA template 2 min at 55°C
- Extension step 3 min at 72°C

After 40 cycles one final extension cycle was carried, for 10 minutes at 72°C to complete all strands. The amplification procedure lasted approximately 4 hours and 30 minutes.

### Genomic DNA and PCR products separation using electrophoresis on agarose gel:

Genomic DNA as well as PCR amplification products were separated and purified was analysed by electrophoresis on 1 % agarose gel in TAE (Tris-acetate 40 mM, EDTA 2 mM, pH 8.3) buffer. The electrophoresis was run under a constant electric current (40 volts) during 4 hours. Samples were load in gel, adding ¼ of the sample volume in gel loading buffer (0.25% bromophenol blue, 0.25% Xylene cyanol and 25% Ficoll 400).

At the end of the electrophoresis, gels were stained with a 0.5 µg/ml ethidium bromide solution, later were photographed and analysed under a photographic-densitometric system (BIOPROFIL), with an ultraviolet transilluminator and a CCD-camera.

### ITS region sequencing

ITS region PCR fragments from the five *Trichoderma* strains were sequenced by using an automatic DNA sequencer (Perkin Elmer/Applied Biosystem). 300 ng of the DNA template and 5 pmols of the following primers were used:
*ITS1: 5'-TCG GTA GGT GAA CCT GCG G-3'*
*ITS2: 5'-GCT GCG TTC TTC ATC GAT GC-3'*
*ITS3: 5'-GCA TCG ATG AAG AAC GCA GC-3'*
*ITS4: 5'-TCC TCC GCT TAT TG,4 TAT GC-3'*

Accessories and habitual reagents from the automatic DNA sequencer equipment by Perkin Elmer were used. Nucleotide sequences obtained were aligned using Meg Align computer program from DNASTAR software package (DNASTAR, London). Database searches were done by using the service provided by EMBL/Gen Bank (European Bioinformatics Institute, EBI) to compare these sequences with other sequences belonging to the genus *Trichoderma.*

Yields of the genomic DNA extraction following the protocols described by Raeder and Broda (1985). The yields obtained were very different on account of the pertinent strain. The low yields obtained in *Trichoderma* confirms that antagonistic subject of this patent, are good biological control agents, adapted to survive in diverse natural environments and has cellular walls difficult to break.

The highly pure genomic DNA obtained following the method described in Raeder and Broda (1985), was used as DNA template to amplify the 5.8s rRNA gene and the ITS1 and ITS2 adjacents regions, following a PCR Protocol using ITS1 and ITS4 primers. The results obtained from the agarose gels shown band of 600 bp length all the *Trichoderma* isolates studied. Two different strains of *Trichoderma* from our laboratory culture collection, previously identified as *Trichoderma harzianum* and *T. ressei,* were used as internal testers.

The 5.8s rRNA subunit, shows a high homology with other filamentous fungi (212 and 318 strains), as well as with other *Trichoderma* strains from Gen Bank. The existing differences were localized in ITS1 region as well as in the ITS2 region. The amplified fragments obtained shown differences in length comprise between the primers ITS1-ITS4 (570 to 600 pb).

The sequences obtained for the five *Trichoderma* strains are added
*Trichoderma* CECT 20443 (ITS region)
*Trichoderma* CECT 20444 (ITS region)
*Trichoderma* CECT 20445 (ITS region)
*Trichoderma* CECT 20447(ITS region)
*Trichoderma* CECT 20481 (ITS region)

The sequences for the *Trichoderma* strains CECT 20443 and CECT 20444, has result to be identical for this gene. However, the morphological, physiological, biochemical and molecular characterizations allows us to have an unequivocal identification of the five *Trichoderma* strains subject of this patent.

### "in vitro " antagonism of five selected Trichoderma strains as Biological Control agents against several pathogens

The antigenic capacity of the all five *Trichoderma* strains against several pathogens was studied. These pathogens are responsible of different diseases in cultivars and important economic losses.

| Phytogens | Host |
|---|---|
| *Acremonium cucurbitacearum* A419 | melon |
| *Verticillium dahliae* | olive-tree, cotton and pink |
| *Rhizoctonia solani* | sugar-beet |
| *Sclerotinia sclerotiorum* | lettuce |
| *Botrytis cinerea* | strawberry |
| *Fusarium oxysporum radicis lycopersici* | tomato |
| *Fusarium oxysporum* 11 | saffron |
| *Fusarium oxysporum* 15 | saffron |
| *Fusarium oxysporum* 339 | saffron |
| *Fusarium moniliforme* | asparagus |
| *Phoma betae* | sugar-beet |
| *Thielaviopsis basicola* | apricot |
| *Pyricularia oryzae* | rice |
| *Colletotrichum fragariae* | strawberry |
| *Rosellinia necatrix* | olive-tree |

The next protocol was followed: a 0.5 cm agar plug was transferred to 2.5 cm of the border of the petri dish, for each strain to assay, and plates were incubated at 25°C in darkness. Fungal pathogen strains plates were grown until colonies had at least 2-2.5 cm in diam. (depending on the pathogen incubation period varied from few hours to a couple of days). When the colonies reached an acceptable diameter, petri dishes were inoculated with 0.5 cm agar plugs of the five *Trichoderma* strains. These agar plugs, were transferred 3 cm away from the point of the pathogen inoculation. Petri dishes were incubated as formerly described. The test was made in triplicate for each *Trichoderma* strain.

The percentage of radial-growth inhibition for each pathogen was calculated following Royse and Ries (1978) using the formula: % radial inhibition = [100×(R1-R2)/R1]. Where R1 is maximum diameter of the colony and R2 is the minimum diameter, measured in the growth inhibition area.

Table 18 shows the results of the antagonic assays for all *Trichoderma* strains.

**Table 18**

| | | | | | |
|---|---|---|---|---|---|
| | A3 | B5 | C7 | F2 | T18 |
| *A. cucurbitacearum* | 22.4 | 22.7 | 19.1 | 46.76 | 46.6 |
| *B. cinerea* | 23.9 | 41.9 | 26.32 | 30.1 | 39.2 |
| *S. sclerotiorum* | 51.9 | 49 | 46.51 | 42.6 | 48.5 |
| *V. dahliae* | 31.6 | 16.9 | 13.1 | 13.1 | 15.4 |
| *R. solani* | 36.12 | 38.3 | 34.2 | 42.43 | 49.06 |
| *P. betae* | 30.74 | 37.3 | 34.5 | 17.1 | 16.1 |
| *F. oxysporum radicis lycopersici* | 20.13 | 22.8 | 14.83 | 28.83 | 34.1 |
| *F. oxysporum 11* | 19.55 | 28.1 | 26.7 | 33.64 | 27.11 |
| *F. oxysporum 15* | 26.71 | n | n | n | n |
| *F. oxysporum 339* | 24.3 | 28.8 | 28.13 | n | n |
| *F. moniliforme* | 25.93 | 23.9 | 22.3 | 10.5 | 24 |
| *T. basicola* | 25.24 | 25 | 31.71 | 10.72 | 18.4 |
| *P. oryzae* | 40 | 33.3 | 35.2 | 27.8 | 28.6 |
| *C.fragariae* | 35.7 | 31.93 | 27.4 | 30.8 | 31.1 |
| *F. amygdali* | n | n | n | 43.8 | 33.8 |
| *S. purpureum* | n | n | n | 27.5 | 28.5 |
| *R. necatrix* | 44.44 | 39.2 | 41.4 | 23.3 | 22.73 |

| | | | | | |
|---|---|---|---|---|---|
| n: not tested | | | | | |

The main mechanisms by which *Trichoderma* strains limited the growth of other microorganism (mycoparasitism, antibiosis and competition) were studied against all pathogens assayed. Result are shown in table 19.

**Table 19**

| | A3 | B5 | C7 | F2 | T18 |
|---|---|---|---|---|---|
| *A. cucurbitacearum* | Antibiosis Competition Mycoparasitism | Light antibiosis Competition Mycoparasitism | Antibiosis Competition Mycoparasitism | Competition | Competition Mycoparasitism |
| *B. cinerea* | Light antibiosis Competition | Light antibiosis Competition | Light antibiosis Competition | Mycoparasitism | Mycoparasitism |
| *S. sclerotiorum* | Light antibiosis Competition | Light antibiosis Competition | Light antibiosis Competition | Competition | Competition |
| *V. dahliae* | Light antibiosis | Light antibiosis | Light antibiosis | Competition Light mycoparasitism | Competition Mycoparasitism |
| *R. solani* | Competition | Light mycoparasitism | Light antibiosis Light mycoparasitism | Mycoparasitism | Mycoparasitism |
| *P. betae* | Competition | Competition | Competition | Mycoparasitism | Light mycoparasitism |
| *F. oxysporum radicis lycopersici* | Antibiosis | Antibiosis | Antibiosis | Competition | Competition Light mycoparasitism |
| *F. oxysporum 11* | Antibiosis | Antibiosis | Antibiosis | Competition | Antibiosis Competition |
| *F. oxysporum 15* | Competition | n | n | n | n |
| *F. oxysporum 339* | Competition | Competition | Competition | n | n |
| *F. moniliforme* | Competition | Competition | Competition | Competition | Mycoparasitism |
| *T. basicola* | Competition | Competition | Competition | Mycoparasitism | Mycoparasitism |
| *P. oryzae* | Competition | Competition | Competition | Mycoparasitism | Mycoparasitism |
| *C. fragariae* | Competition | Competition | Competition | Competition Antibiosis | Competition Light mycoparasitism |
| *F. amygdali* | n | n | n | Competition Antibiosis Light mycoparasitism | Competition Light antibiosis Mycoparasitism |
| *S. purpureum* | Competition | Competition | Competition | Mycoparasitism | Mycoparasitism |
| *R. necatrix* | Competition | Competition | Competition | Competition Mycoparasitism | Competition Mycoparasitism |

| | | | | | |
|---|---|---|---|---|---|
| n: not tested | | | | | |

### Trichoderma strains "in vitro " compatibility with different commercial insecticides and fungicides.

Compatibility of the different *Trichoderma* strains with several chemical pesticides used extensively in agriculture was evaluated. This assay allows elucidate the possibility of using chemical pesticides and antagonist microoganism jointly. The application of a integrated pest management, which combines usual tools for chemical control together with effective biological control agents, like *Trichoderma* spp., allows prolonging the interval between successive treatments and also reduce the residues.

The integrated pest management success combining pesticides and antagonist has been observed in fungal soil pathogen control as well as against microorganism that attack aerial plant tissues.

Biological control Agents survival to chemical treatments, confers them a complementary effect and a reinforcement of their properties. A detailed treatment plan throughout the disease development period can only be done once the pesticide tolerance has been established.

Integrated pest management using biological control agents mayor benefits would be:
- A diminution in chemical fungicide and insecticide use. Consequence of this will be a smaller accumulation of pesticide residues in the environment.
- The less the pathogens are exposed to chemical fungicides the less resistances will be acquired by them and therefore virulence and damage severity in crops will be reduced.
The test was made using two different fungicide concentrations: The maximum and minimum doses advised by the manufacturer.

Culture medium used was Lynch B (LB) with 1 % glucose as carbon source. Inoculums used were PDA agar-plugs of *Trichoderma* strains pregrown for two days at 24°C. Two sets of petri dishes were prepared, one of them containing different concentrations of the fungicide used in the test and the other one without it (treated plates and control plates). Petri dishes were incubated at 25°C in darkness for 21 days. The experiment was made in triplicate.

The inhibition percentage was measured at 4, 7, and 21 days. The results are given using the following formula: Inhibition percentage =[(C-T)*100]/C; where C is the average of the three control strains and T is the average of the three strains treated with each product.

### Insecticide compatibility

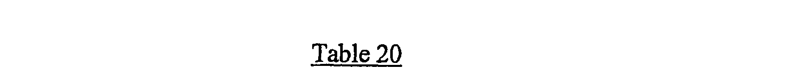

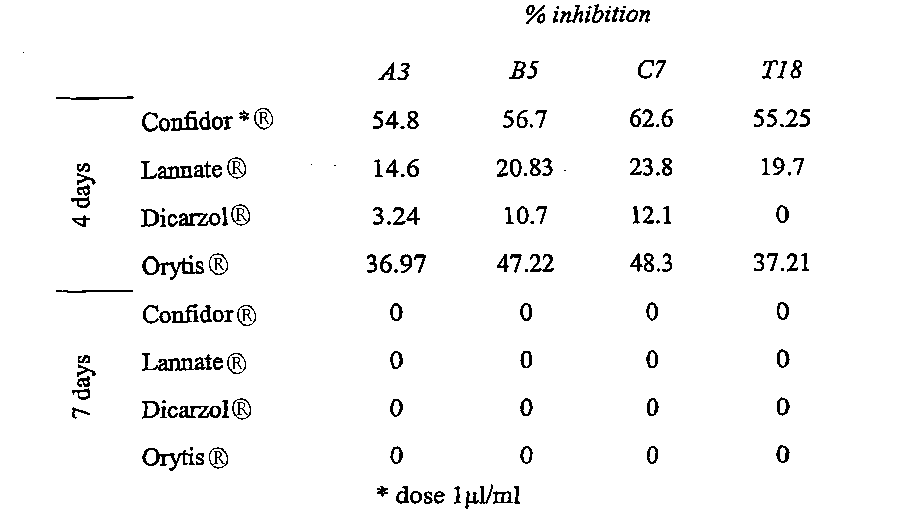

### Total compatibility of all Trichoderma strains with all the insecticides was observed after the 7 day. (0 = total growth).

### Fungicide compatibility

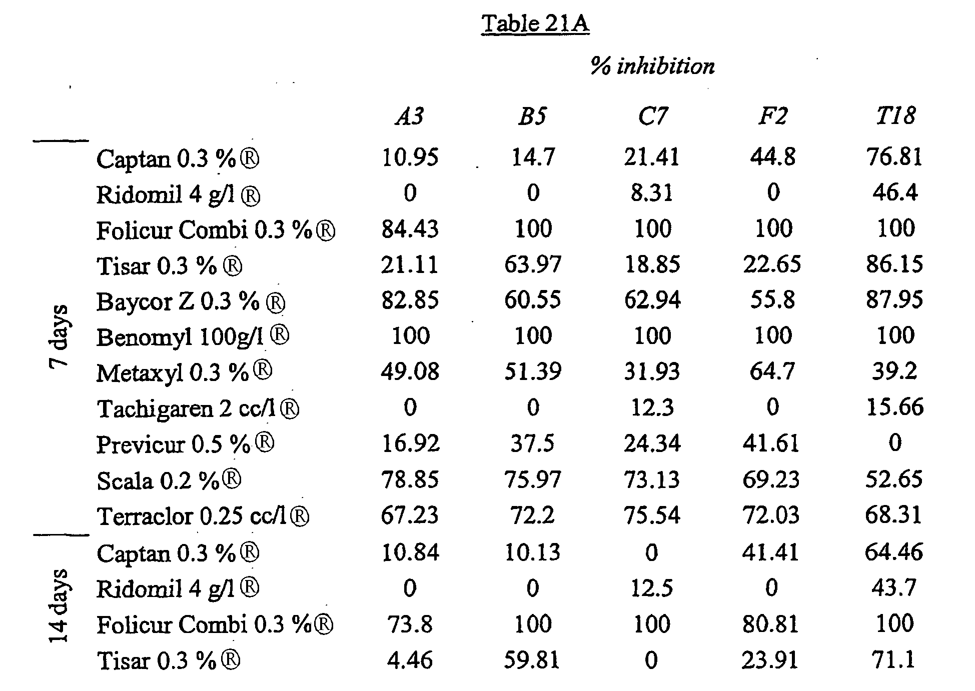

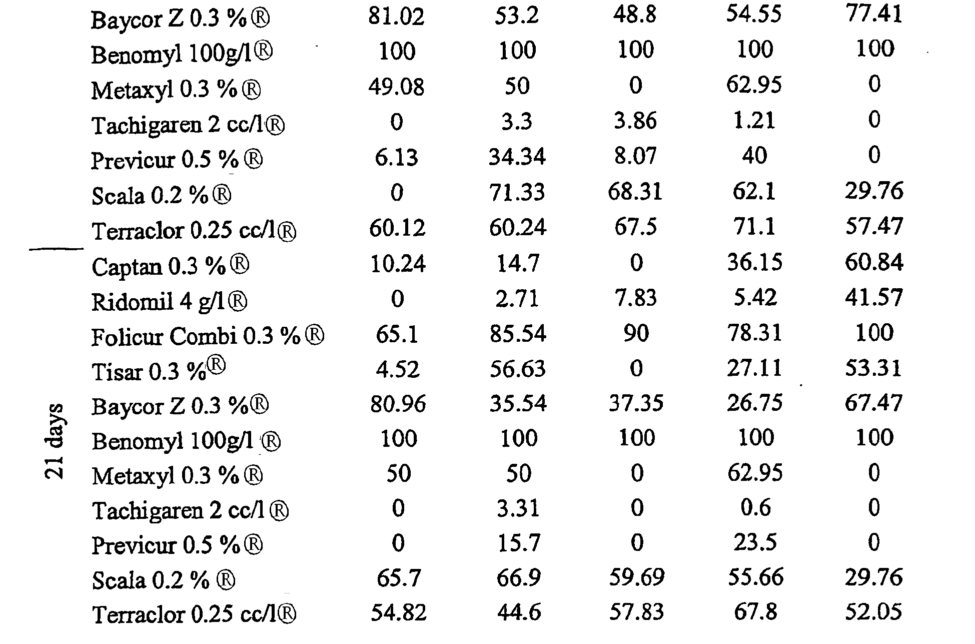

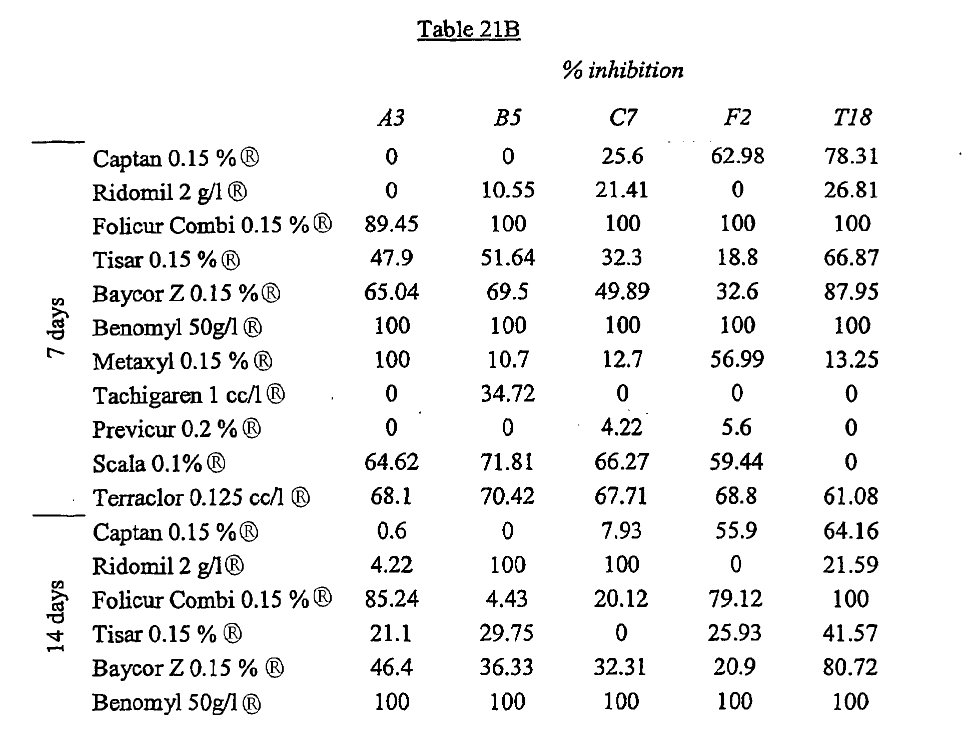

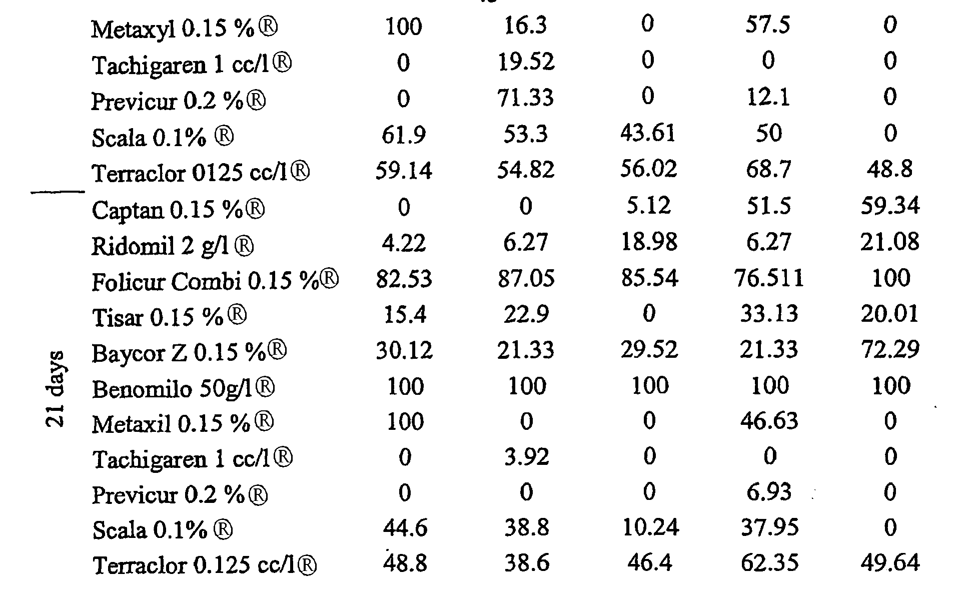

Considering all previously described concerning this patent invention, we provide a solid formulation including carbon sources, minerals, trace elements, such as organic and inorganic nutrients, together with vegetative and reproductive structures of five *Trichoderma* strains (CECT 20443; CECT 20444; CECT 20445; CECT 20447; CECT 20481).

Each *Trichoderma* strain, subject of this patent, is a microorganism specifically adapted to abiotic conditions. In fact, the antagonist activity of each *Trichoderma* strain may vary, depending of the pathogen. Usage of a fungal association with five *Trichoderma* strains in a preparation, increases the treatment spectrum, against several microorganisms causing different plant pathologies (damping-off, hydric stress collapse, etc).

As formerly said, herein are described liquid and solid formulations for soil and/or aerial application, containing vegetative and reproductive structures of five *Trichoderma* strains isolated and characterized herein.

The disclosure is further illustrated by the following non-limiting examples, which make reference to the accompanying figures.

### FIGURES

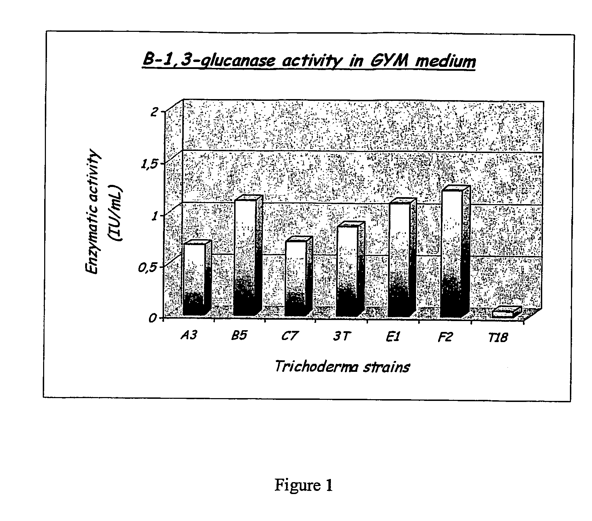

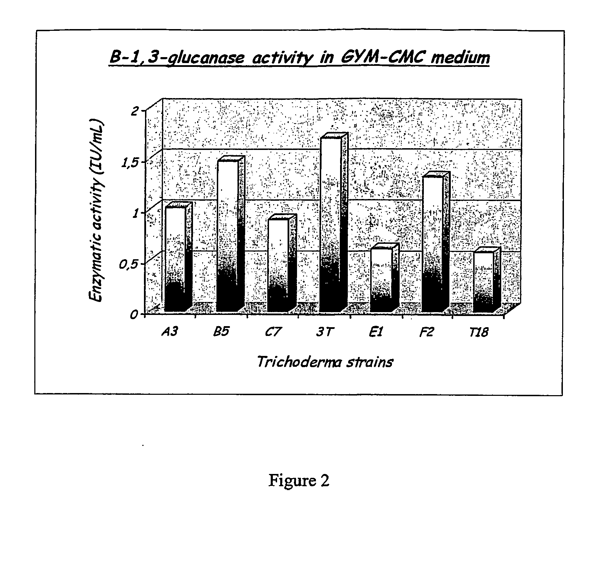

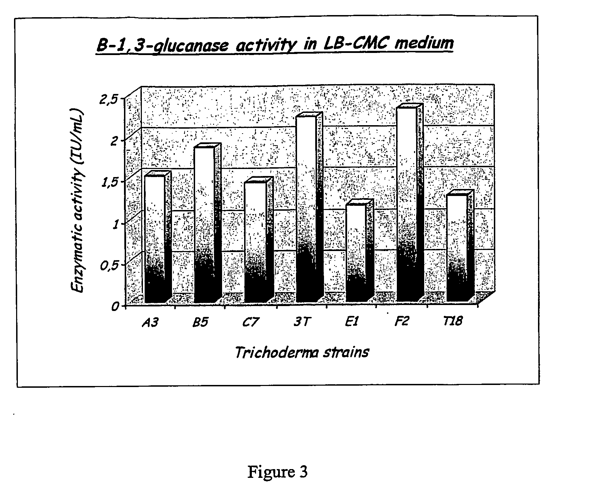

Figures 1 to 3 show glucanase activity results reported in Table 13.

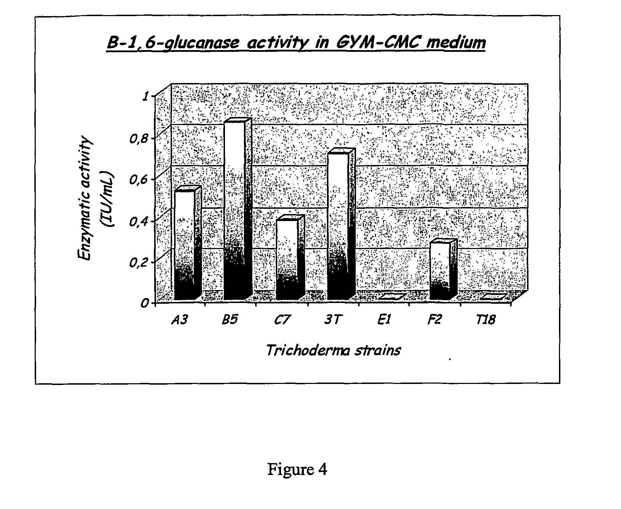

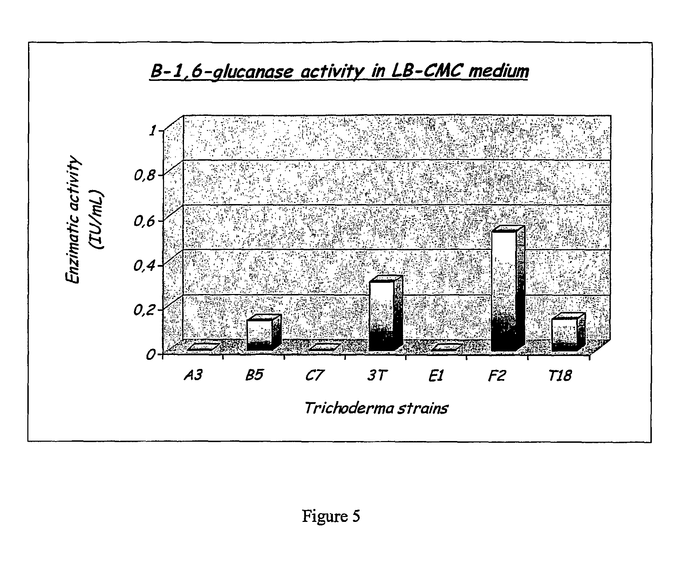

Figures 4 and 5 show glucanase activity results reported in Table 14.

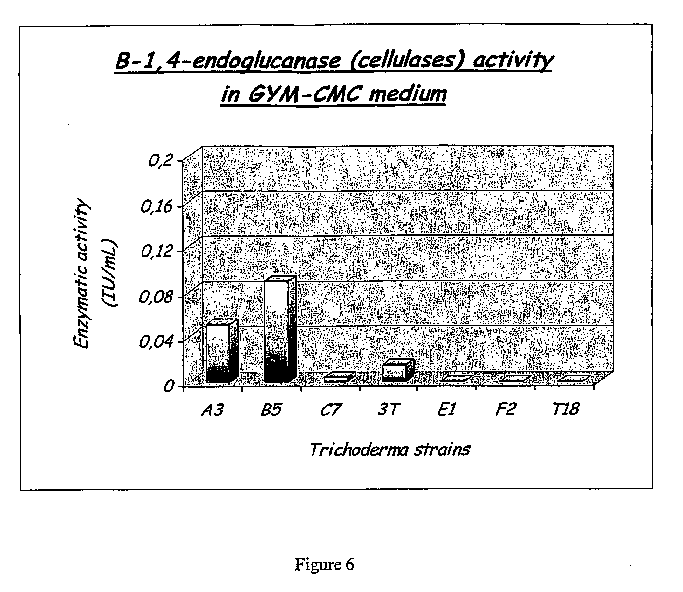

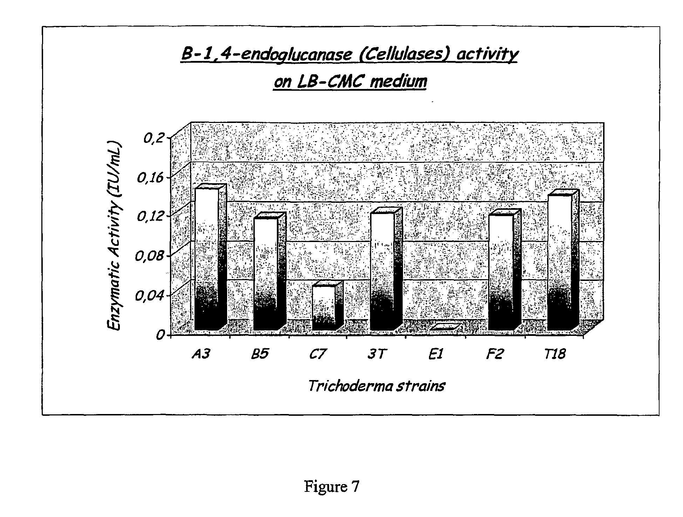

Figures 6 and 7 show glucanase activity results reported in Table 15.

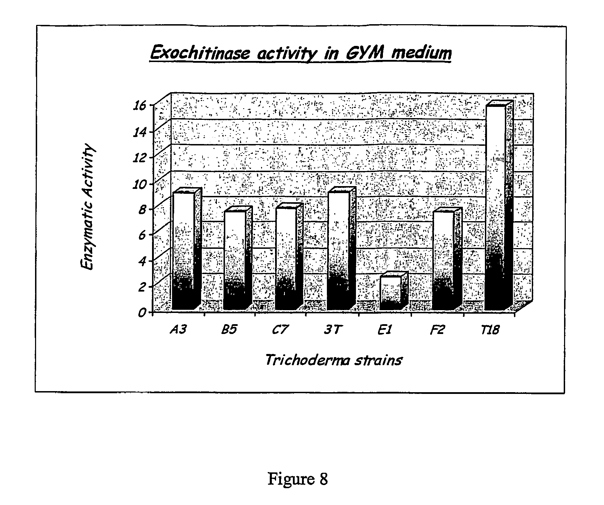

Figure 8 shows glucanase activity results reported in Table 16.

### EXAMPLES

### EXAMPLE 1

A liquid formulation of this invention and its quantitative composition is given as follows:
• Vegetal oils 94-96 %
• Inert components 6-4 %
• One strains or mixture from the following group:

| | |
|---|---|
| *Trichoderma* CECT 20443 c.s.p. | 2×10³-2×10⁹ conidia/ml. |
| *Trichoderma* CECT 20444 c.s.p. | 2×10³-2×10⁹ conidia/ml |
| *Trichoderma* CECT 20445 c.s.p. | 2×10³-2×10⁹ conidia/ml. |
| *Trichoderma* CECT 20447 c.s.p. | 2×10³-2×10⁹ conidia/ml. |
| *Trichoderma* CECT 20481 c.s.p. | 2×10³-2×10⁹ conidia/ml. |

It is a mixture of differents non ionic surfactants, emulsifiers with vegetal oils. The formulation includes some components which *Trichoderma* uses as nutrients and supports enough humidity for *Trichoderma* germination.

The oils nature from this formulation acts like adherent and/or preventing evaporation which allows spore persistence on leaves surface and plants, maintaining the product concentration and avoiding the volatilization.

Because of the characteristics formerly described, formulation efficiency for pathogens control which attacks aerial parts (leaf diseases caused by *Botrytis, Sphaerotheca, Erysiphe,* etc.) which have not been easily controlled with liquid formulations up to date.

The vegetal oils used in this formulation, are a mixture of emulsifiers proceeding from plants extract like *Aloe vera,* soybean, jojoba, etc., or fatty acid esters with glycerol. The tensioactive agents sorbilene, polyethilenglicol, etc, are the inert part of this formulation.

### EXAMPLE 2

A liquid formulation of this invention and its quantitative composition is given as follows:
- Molasses 40-100 g/l
- Sorbytol 15-40 g/l
- Phyto-Fos-K * 1-10g/l
- NO₃K 1-10 g/l
- Mg₂SO₄ 7 H₂O 0,1-10 g/l
- NH₄H₂PO₄ 0.1-10 g/l
- CuSO₄ 5H₂O 1-15 mg/l
- ZnSO₄ 7H₂O 1-15 mg/l
* Phyto-Fos-K: provided for A.M.C. Chemical Company, containing phosphoric anhydride 25% (w/w) and potassium oxide 18% (w/w).

One strains or mixture from the following group:

| | |
|---|---|
| *Trichoderma* CECT 20443 c.s.p. | 2×10³-2×10⁹ conidia/ml. |
| *Trichoderma* CECT 20444 c.s.p. | 2×10³-2×10⁹ conidia/ml |
| *Trichoderma* CECT 20445 c.s.p. | 2×10³-2×10⁹ conidia/ml. |
| *Trichoderma* CECT 20447 c.s.p. | 2×10³-2×10⁹ conidia/ml. |
| *Trichoderma* CECT 20481 c.s.p. | 2×10³-2×10⁹ conidia/ml. |

These formulation elements, are used like nutritional source by antagonist microorganisms (*Trichoderma*) besides, provides a suitable environment and promotes the survival on soil.

Nature of the liquid formulation promotes its drainage on soils, allowing the conidia colonization around plant rhizosphere, protecting roots from possible pathogens.

### EXAMPLE 3

Present invention gives a solid formulation compose by a carrier and a combination of biological compounds which quantitative composition is as follows:

### Carrier

- Proteins 10-50 %
- Fats 10-30 %
- Cellulose 1-10 %
- Lactose 10-60 %
- A vitamin 10.000-30.000 UI/Kg
- D-3 vitamin 1.000-10.000 UI/Kg
- E vitamin 10-60 mg/Kg
- Cupric sulfate (Cu SO₄.5H₂O) 5-20 mg/Kg

### Biological compounds

One or more *Trichoderma* strains listed below:

| | |
|---|---|
| *Trichoderma* CECT 20443 c.s.p. | 2×10³-2×10⁹ conidia/ml. |
| *Trichoderma* CECT 20444 c.s.p. | 2×10³ -2×10⁹ conidia/ml |
| *Trichoderma* CECT 20445 c.s.p. | 2×10³-2×10⁹ conidia/ml. |
| *Trichoderma* CECT 20447 c.s.p. | 2×10³-2×10⁹ conidia/ml. |
| *Trichoderma* CECT 20481 c.s.p. | 2×10³-2×10⁹ conidia/ml. |

On account to the carrier characteristics, the formulation helps increasing conidial longevity and viability in all *Trichoderma* strains subject of this invention. Due to contributes to the water absorption and facilitates conidial suspension into a liquid medium, at the moment of its application.

On account to the nature of carrier carbohydrates, which have adherent character, help (like in example 1) *Trichoderma* conidia adhesion to the treated aerial plant parts.

The carrier can be use like nutritional source for antagonist microorganism (*Trichoderma*)*.* At the same time, provides a suitable microenvironment helping its establishment and survival onto the plant.

The most important carrier characteristic is a protector against sunrays, increasing the genetic stability of the strains, helping them to preserve the efficiency and decreasing the mortality once applied on fields.

Due to all these characteristics, the formulation has shown to have a good stability during the storage at room temperature and under refrigeration.

### EXAMPLE 4

This invention provides a solid formulation whose quantitative composition is as follows:
- Total organic matter 8.7-90 %
- Organic nitrogen 0.16-10%
- Protein 1-20 %
- Phosphorus (P) 0.025-2 %
- Potassium (K) 0.02-2 %
- Magnesium (Mg) 0.01-1 %
- Calcium (Ca) 16-200 ppm
- Iron (Fe) 16-100 ppm
- Manganese (Mn) 5-100 ppm
- Zinc (Zn) 10-100 ppm
- Copper (Cu) 0.1-10 ppm

One or more *Trichoderma* strains listed below:

| | |
|---|---|
| *Trichoderma* CECT 20443 c.s.p. | 2×10³-2×10⁹ conidia/ml. |
| *Trichoderma* CECT 20444 c.s.p. | 2×10³-2×10⁹ conidia/ml |
| *Trichoderma* CECT 20445 c.s.p. | 2×10³-2×10⁹ conidia/ml. |
| *Trichoderma* CECT 20447 c.s.p. | 2×10³-2×10⁹ conidia/ml. |
| *Trichoderma* CECT 20481 c.s.p. | 2×10³-2×10⁹ conidia/ml. |

The organic matter used in this formulation can be glucose polymers like starch coming from plants like corn, potato, rice, etc., or simple sugars like glucose, sucrose, fructose and lactose. While, proteins can be such as albumin, globulin etc.

This solid formulation has been obtained from a semisolid fermentative process. Once fermentation is finished, biomass is recovered together with the medium used. After a dry process between 30 and 35 °C for 7 days, it is submitted to crushing process.

Obtained conidia are characterized for a correct stability and viability, specially when not refrigerated, and greater tolerance to temperature, change, drying and radiation exposure. The conidia have better efficacy if it is used at commercial scale in environmental agronomic conditions.

Solid formulation, can be stored refrigerated at 4°C or at room temperature, avoiding heat, keeping temperature lower than 18°C. It can be applied directly onto soil or crops through irrigation. It can also be applied by mixing it with fertilizers or composts because it helps its dissemination. Product dilution helps microorganism dissemination and lets the starters begin growing and developing, getting myceliar mass which will let them colonize the soil.

### EXAMPLE 5

An application method using the formula previously described and used in EXAMPLES 1 and 2 to control and treat root rot diseases in Iceberg variety of lettuce cultures, caused by *Botrytis* sp., *Sclerotinia* sp. and *Rhizoctonia* sp., in Aguilas (Murcia).

The assay was carried out on a 2 hectares plot, during the second transplanT. Many damaged plants were detected during the first plantation. The following treatments were designed:
- T1: blank control without fungicide
- T2: treatment consisting in a combination of the formulas described in example 1 (aerial treatment) and example 2 (soil treatment) 750 cc of each formulation were diluted to 12 liters of water. A pre-treatment was carried out in transplant trays, submerging them for 1 minute in the dilution containing the formulation of the EXAMPLE 2. After a settle time, the example 1 formulation was applied to aerial plant parts. The rest was applied weekly in 1.5 liters per hectare for 4 consecutive weeks (repetitive dose) to soil and leaves.

The results were quantified choosing randomly 1200 plants in each treatment, looking for healthy and diseased plants affected with any of the former pathogens.

Results of the test were: In control plot (T1), the diseased plants were nearly 62.5%, while in the treated plot (T2) the disease incidence was 12.5 %. The disease incidence was decreased mainly by *Botrytis, Sclerotinia* and *Rhizoctonia* about 50% in relation to control plot.

### EXAMPLE 6

A method for *Dematophora necatrix* control and treatment is described, since it is one of the most serious diseases of olive plantations in Tarragona. It is observed that adult trees lose their green colour of its vegetal mass, loosing brightness and finally turning yellowish (chlorotic), the decolouration starts from the leaf tip to the petiole, sometimes appearing necrotic tips. Later, occurs a fall of leaves, what entails leafiness. In flowering and harvest time, symptoms are more evidenT. The fruit matured early and showing a black and violet between the yellow leafiness. At the end, the tree dies quickly.

The studied plot has 72 trees (Arbequina variety). The mortality before the treatment started was 29 dead trees and 7 with disease symptoms. Dead trees (M) was substituted at the beginning of the test (R) by other healthy trees. During the test, the following variables were analysed:
- Tree mortality during the test.
- New symptoms in healthy or replanted trees (confirmed in laboratory).
- Healing diseased trees.

To realize the test, formulation in EXAMPLE 3 was used, at a 50cc/tree dosification. After repetitive doses were applied in 35 days interval during two years of treatment.

The results are shown in the following table:

| | |
|---|---|
| X | Healthy tree at the beginning or after substitution |
| R | Replanted tree |
| X o R | Tree showing disease symptoms |
| M | Dead tree at the beginning of the test |
| M | Dead tree during the treatment |
| X o R | Healed tree |

| Starting situation | | | | | | 1 | | | | 2 | |
|---|---|---|---|---|---|---|---|---|---|---|---|
| | | | | | | | R | | | | R |
| | | | | | | R | R | | | R | X |
| | | | | | R | R | R | | R | R | R |
| | | X | X | R | R | X | X | R | R | X | X |
| | X | M | X | R | X | R | X | R | X | R | X |
| | X | M | X | R | X | R | X | R | X | R | X |
| M | M | M | M | R | R | R | R | R | R | R | R |
| X | M | M | M | X | R | R | R | X | R | R | R |
| M | X | M | X | R | X | R | X | R | X | R | X |
| X | M | M | M | X | R | R | R | X | R | M | M |
| M | M | M | M | R | R | R | R | R | R | R | R |
| M | M | M | X | R | R | R | X | R | R | R | X |
| M | M | M | M | R | R | R | R | R | R | R | R |
| X | X | M | X | X | X | R | X | X | X | R | X |
| X | X | X | M | X | X | X | R | X | X | X | R |
| X | X | X | X | X | X | X | X | X | X | X | X |
| M | X | X | X | R | X | X | X | R | X | X | X |
| X | X | X | X | X | X | X | X | X | X | X | X |
| X | X | X | X | X | X | X | X | X | X | X | X |
| X | X | X | X | X | X | X | X | X | X | X | X |
| X | X | X | X | X | X | X | X | X | X | X | X |
| X | X | X | M | X | X | X | R | X | X | X | R |

| | | | | | | | | | | | |
|---|---|---|---|---|---|---|---|---|---|---|---|
| 1: situation at 03/2001 after replantation 2: final situation 10/2001 | | | | | | | | | | | |

### EXAMPLE 7

Five *Trichoderma* strains are combined in the application method described in EXAMPLE 4, in order to control *Thielaviopsis basicola* in *Ciclamen* and *Poinsetia* crops. The efficacy of this formulation against classics phytosanitaries was compared in this tesT.

A treatment was done at the beginning (May-June) of the crops, just after planting the cutting in the definitive poT. Dosages of 300 cc/m3 were applied. 30-40 days later, another treatment was done using half dose. At the same time, in other distant plots, treatments with Benomyl, Clorotalonil and Propamocarb were done, following the manufacturer recommended dose. A plot without treatment was the control.

*Trichoderma* treatment gave very good results, in fact, an increased root growth rate was observed and a decrease in dead plants (compared with pesticide and chemical treated and test plants).

### REFERENCES

Elad, Y and Shtienberg, D. (1997). Integrated management of foliar diseases in greenhouses vegetables according to principles of a decision support system-greenman. Bulletin OILB/SROP, 20: 71-77.
Kuhls, K., Lieckfeldt, E., Samuels, G.J., Kovacs, W., Meyer, W., Petrini, O., Gams, W., Börner, T. and Kubicek, C.P. (1996). Molecular evidence that the asexual industrial fungus Trichoderma reesei is a clonal derivate of the ascomycete Hypocrea jecorina. Proccedings of the National Academy of Sciences, U.S.A.
Mullis, K.B. and Fallona, F.A. (1987). Specific synthesis of DNA in vitro via polymerase-catalyzed chain reaction. Methods in Enzymology 155: 335-350.
Nelson, N.J. (1957). Colorimetric analysis of sugars. En Methods in enzymology. Vol. III. (eds. S.P. Colowick and N. Kaplan). New York: Academic Press pp 85-86.
Raeder , U. and Broda, P. (1985). Rapid preparation of DNA from filamentous fungi. Letters Applied Microbiology 1: 17-20*.*
Sambrook, J., Fritsche, E. and Maniatis, T. (1989). Molecular cloning: A laboratory manual. Cold Spring Harbor: Cold Spring Harbor Laboratory*.*
Somogyi, M. (1952). Notes on sugar determination. Journal Biological Chemistry 195:19-29.
White, T.J., Bruns, T., Lee, S. and Taylor, J. (1990). Amplification and direct sequencing of fungal ribosomal RNA gens for phylogenetics. In PCR Protocols-A Guide to Methods and Applications. (ed. M.A. Innis et al.). San Diego:Academic Press pp. 315-322.
WO 97/16974 (GARCIA ANCHA ISABEL; MONTE VAZQUEZ ENRIQUE (ES); UNIV SALAMANCA (ES)) 15 May 1997

## Claims

1. A liquid formulation having its quantitative composition as follows:
• Vegetal oils 94-96 wt%
• Inert components 6-4 wt%
• A mixture of:
| | |
|---|---|
| *Trichoderma* CECT 20443 | 2x10³ -2x10⁹ conidia/ml, |
| *Trichoderma* CECT 20444 | 2x10³ -2x10⁹ conidia/ml, |
| *Trichoderma* CECT 20445 | 2x10³ -2x10⁹ conidia/ml, |
| *Trichoderma* CECT 20447 | 2x10³ -2x10⁹ conidia/ml, and |
| *Trichoderma* CECT 20481 | 2x10³ -2x10⁹ conidia/ml |

2. A formulation according to claim 1 to control and treat diseases in lettuce cultured caused by *Botrytis* sp., *Sclerotinia* sp. and *Rhizoctonia* sp.

3. A solid formulation whose quantitative composition is as follows:
• Total organic matter 8.7-90 wt%
• Organic nitrogen 0.16-10 wt%
• Protein 1-20 wt%
• Phosphorous (P) 0.025-2 wt%
• Potassium (K) 0.02-2 wt%
• Magnesium (Mg) 0.01-1 wt%
• Calcium (Ca) 16-200 ppm
• Iron (Fe) 16-100 ppm
• Manganese (Mn) 5-100 ppm
• Zinc (Zn) 10-100 ppm
• Copper (Cu) 0.1-10 ppm
• A mixture of:
| | |
|---|---|
| *Trichoderma* CECT 20443 | 2x10³ -2x10⁹ conidia/ml, |
| *Trichoderma* CECT 20444 | 2x10³ -2x10⁹ conidia/ml, |
| *Trichoderma* CECT 20445 | 2x10³-2x10⁹ conidia/ml, |
| *Trichoderma* CECT 20447 | 2x10³ -2x10⁹ conidia/ml, and |
| *Trichoderma* CECT 20481 | 2x10³ -2x10⁹ conidia/ml |

4. A formulation according to claim 3 for control and treatment of *Dematophora necatrix* in olive trees

5. The use of a formulation according to claim 3 for controlling the transmission and extension of *Thielaviopsis basicola* in *Cyclamen* and *Poinsettia* crops

6. A formulation according to claims 1 and 3, for use with chemical insecticides, which have been found to be compatible, examples of which are Orytis®, Dicarzol®, Lannate®, and Confidor® in a integrated pest management program

7. A formulation according to claims 1 and 3, for use with chemical fungicides examples of which are Captan®, Ridomil®, Folicur® Combi®, Tisar®, Baycor® , Benomyl®, Metaxyl®, Tachigaren®, Previcur®, Scala®, Terraclor® , in a integrated pest management program.

## Patentansprüche

1. Flüssige Formulierung, deren quantitative Zusammensetzung wie folgt ist:
- Pflanzliche Öle 94-96 Gew.-%
- Inerte Komponenten 6-4 Gew.-%
- Ein Gemisch aus:
| | |
|---|---|
| *Trichoderm* CECT 20443 | 2x10³ -2x10⁹ Konidien/ml, |
| *Trichoderm* CECT 20444 | 2x10³-2x10⁹ Konidien/ml, |
| *Trichoderm* CECT 20445 | 2x10³-2x10⁹ Konidien/ml, |
| *Trichoderm* CECT 20447 | 2x10³-2x10⁹ Konidien/ml, und |
| *Trichoderm* CECT 20481 | 2x10³-2x10⁹ Konidien/ml |

2. Formulierung nach Anspruch 1, um Krankheiten in kultiviertem Kopfsalat, hervorgerufen durch *Botrytis* sp., *Sclerotinia* sp. und *Rhizoctonia* sp, zu kontrollieren und zu benadeln.

3. Feste Formulierung, deren quantitative Zusammensetzung wie folgt ist:
- Gesamt organisches Material 8,7-90 Gew.-%
- Organischer Stickstoff 0,16-10 Gew.-%
- Protein 1-20 Gew.-%
- Phosphor (P) 0,025-2 Gew.-%
- Kalium (K) 0,02-2 Gew.-%
- Magnesium. (Mg) 0,01-1 Gew.-%
- Kalzium (Ca) 16-200 ppm
- Eisen (Fe) 16-100 ppm
- Mangan (Mn) 5-100 ppm
- Zink (Zn) 10-100 ppm
- Kupfer (Cu) 0,1-10 ppm
- Ein Gemisch aus:
| | |
|---|---|
| *Trichoderm* CECT 20443 | 2x10³ -2x10⁹ Konidien/ml, |
| *Trichoderm* CECT 20444 | 2x10³-2x10⁹ Konidien/ml, |
| *Trichoderm* CECT 20445 | 2x10³-2x10⁹ Konidien/ml, |
| *Trichoderm* CECT 20447 | 2x10³-2x10⁹ Konidien/ml, und |
| *Trichoderm* CECT 20481 | 2x10³-2x10⁹ Konidien/ml, |

4. Formulierung nach Anspruch 3 zur Kontrolle und Behandlung von *Dematophora necatrix* in Olivenbäumen.

5. Verwendung einer Formulierung nach Anspruch 3 zur Kontrolle der Übertragung und Verbreitung von *Thielaviopsis basicola* in *Cyclamen-* und *Poinsettien*-Ernten.

6. Formulierung nach Anspruch 1 und 3 zur Verwendung mit chemischen Insektiziden, die sich als kompatibel erwiesen haben, z.B. Orytis®, Dicarzol®, Lannate® und Confidor®, in einem integrierten Schädlingsbekämpfungsprogramm.

7. Formulierung nach Anspruch 1 und 3 und zur Verwendung mit chemischen Fungiziden, z.B. Captan®, Ridomil®, Folicur®, Combi®, Tisar®, Baycor®, Benomyl®, Metaxyl®, Tachigaren®, Previcur®, Scala ®, Terraclor®, in einem integrierten Schädlingsbekämpfungsprogramm.

## Revendications

1. Une formulation liquide dont la composition quantitative est comme il suit:
• huiles végétales 94-96% en poids
• composants inertes 6-4% en poids
• un mélange de:
| | |
|---|---|
| *Trichoderma* CECT 20443 | 2x10³-2x10⁹ conidies/ml |
| *Trichoderma* CECT 20444 | 2x10³-2x10⁹ conidies/ml |
| *Trichoderma* CECT 20445 | 2x10³ -2x10⁹ conidies/ml |
| *Trichoderma* CECT 20447 | 2x10³-2x10⁹ conidies/ml, et |
| *Trichoderma* CECT 20481 | 2x10³-2x10⁹ conidies/ml |

2. Une formulation selon la revendication 1 pour contrôler et traiter des maladies de la laitue cultivée produites par *Botrylis* sp., *Scleotinia* sp. Et *Rhizoctonia* sp.

3. Une formulation solide dont la composition quantitative est comme il suit:
• Matière organique totale 8,7 - 90% en poids
• Azote organique 0,16 - 10% en poids
• Protéine 1 - 20% en poids
• Phosphore (P) 0,025 - 2% en poids
• Potassium (K) 0,02 - 2% en poids
• Magnésium (Mg) 0,01 - 1 % en poids
• Calcium (Ca) 16 - 200 ppm
• Fer (Fe) 16 - 100 ppm
• Manganèse (Mn) 5 - 100 ppm
• Zinc (Zn) 10 - 100 ppm
• Cuivre (Cu) 0,1 - 10 ppm
• Un mélange de:
| | |
|---|---|
| *Trichoderma* CECT 20443 | 2x10³-2x10⁹ conidies/ml |
| *Trichoderma* CECT 20444 | 2x10³-2x10⁹ conidies/ml |
| *Trichoderma* CECT 20445 | 2x10³-2x10⁹ conidies/ml |
| *Trichoderma* CECT 20447 | 2x10³-2x10⁹ conidies/ml, et |
| *Trichoderma* CECT 20481 | 2x10³-2x10⁹ conidies/ml |

4. Un formulation selon la revendication 3 pour le contrôle et le traitement de *Dematophora necatrix* dans les oliviers.

5. L'utilisation d'une formulation selon la revendication 3 pour contrôler la transmission et l'extension de *Thielaviopsis basicola* dans les cultures de Cyclamen et Poinsettia.

6. Une formulation selon les revendications 1 et 3, pour son utilisation avec des insecticides chimiques, qui se sont avérés être compatibles, des exemples desquels sont Orytis®, Dicarzol®, Lannate® et Confidor®, dans un programme de gestion intégrée des ravageurs.

7. Une formulation selon les revendications 1 et 3, pour son utilisation avec des fongicides chimiques, des exemples desquels sont Captan®, Ridonil®, Folicur® Combi®, Tisar®, Baycor®, Benomyl®, Metaxyl®, Tachigaren®, Previcur®, Scala®, Terraclor®, dans un programme de gestion intégrée des ravageurs.
